(19) Europäisches Patentamt
European Patent Office
Office européen des brevets

(11) **EP 4 249 169 A1**

(12) **EUROPEAN PATENT APPLICATION**
published in accordance with Art. 153(4) EPC

(43) Date of publication:
**27.09.2023  Bulletin 2023/39**

(21) Application number: **22875920.5**

(22) Date of filing: **20.09.2022**

(51) International Patent Classification (IPC):
**B23Q 17/24** (2006.01)    **B23Q 17/20** (2006.01)
**G01B 11/00** (2006.01)    **G01B 11/02** (2006.01)
**G05B 19/18** (2006.01)    **G05B 19/404** (2006.01)

(52) Cooperative Patent Classification (CPC):
**B23Q 17/20; B23Q 17/24; G01B 11/00;**
**G01B 11/02; G05B 19/18; G05B 19/404;**
**Y02P 90/02**

(86) International application number:
**PCT/JP2022/034919**

(87) International publication number:
**WO 2023/054049 (06.04.2023 Gazette 2023/14)**

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**
Designated Extension States:
**BA ME**
Designated Validation States:
**KH MA MD TN**

(30) Priority: **29.09.2021  JP 2021158845**
**04.07.2022  JP 2022107560**

(71) Applicant: **DMG Mori Co., Ltd.**
**Yamatokoriyama-shi, Nara 639-1160 (JP)**

(72) Inventors:
• **KANTO, Kenta**
**Yamatokoriyama-shi, Nara 639-1160 (JP)**

• **YAMADA, Tomoaki**
**Yamatokoriyama-shi, Nara 639-1160 (JP)**
• **KUBOTA, Junichi**
**Yamatokoriyama-shi, Nara 639-1160 (JP)**
• **YAMAMOTO, Kazuyuki**
**Sapporo City, Hokkaido 004-0015 (JP)**
• **OKUNO, Junichiro**
**Sapporo City, Hokkaido 004-0015 (JP)**
• **YANAGIHARA, Keisuke**
**Sapporo City, Hokkaido 004-0015 (JP)**
• **INOUE, Takashi**
**Sapporo City, Hokkaido 004-0015 (JP)**

(74) Representative: **Isarpatent**
**Patent- und Rechtsanwälte Barth**
**Charles Hassa Peckmann & Partner mbB**
**Friedrichstrasse 31**
**80801 München (DE)**

(54) **INFORMATION PROCESSING DEVICE, MACHINING SYSTEM, MACHINING TOOL, AND PROGRAM**

(57)    An information processing device to process a two-dimensional image generated by an imaging unit in a machine tool including an attachment unit to which the imaging unit or a tool is removably attached, the attachment unit moving to capture an image of a workpiece placed in the machine tool, the imaging unit capturing the image of the workpiece at an imaging position, the information processing device including a computation unit for (i) calculating a position of the workpiece based on a captured image captured after the imaging unit has moved to a predetermined position based on machine coordinates of the machine tool, and (ii) detecting an edge of the workpiece from the two-dimensional captured image captured by the imaging unit at an imaging position after the imaging unit has been moved from the predetermined position to the imaging position, and calculating a length of the workpiece from detected edges.

FIG. 6

**Description**

Technical Field

The present invention relates to a technique to measure a workpiece placed in a machine tool.

Background Art

A machine tool performs machining on a workpiece such as drilling. As a method of checking machining results, a worker removes the workpiece from the machine tool and measures the workpiece using an instrument. When checking the machining results of the workpiece during the process of machining, it takes time and effort to remove the workpiece once, measure it, and then place it again.

There is also known a method using a touch probe attached to the main shaft as a workpiece measurement method. In this method, the main shaft is moved, and the touch probe is lowered from this position to detect contact with the workpiece. In a case of measuring a plurality of areas, an approach motion is needed in which the main shaft is moved toward each of the areas and the touch probe is lowered. In this method, much time is required for the movement of the main shaft and the approach motion of the touch probe. There is also a problem that it is difficult for the touch probe to measure the fine shapes of a workpiece, and thus the touch probe is not suitable for measurement of the orientation of a workpiece.

Related Art List

Patent Literature 1: JP 2019-185581 A

Summary

Technical Problem

There is another possible method to perform measurement at a higher speed than the method using a touch probe. This method uses an imaging device to capture an image of a machined workpiece, analyze the captured image, and measure the machining results. Measurement by means of imaging does not need the approach motion of the touch probe. A plurality of areas of the workpiece can be captured by a single imaging. This can reduce the number of times of movement of the main shaft.

Patent Literature 1 describes an example in which a photographing device is used to photograph a workpiece during the process of machining. In this example, a three-dimensional model is created using the photographed image of the workpiece, and compared with a three-dimensional model in machining simulation to determine whether there is any machining defect.

Patent Literature 1 describes that feature points are extracted from the image data, and a three-dimensional model is generated based on the feature points. However, how to specifically perform the processing is unclear. To be more specific, the location where a camera is installed, and how an image of the workpiece is captured is unclear. Accordingly, it is assumed that an image of a rough shape of the workpiece is captured, and measurement of the shape of fine portions is not assumed.

Solution to problem

An information processing device according to an aspect of the present invention is an information processing device to process a two-dimensional captured image generated by being captured by an imaging unit in a machine tool including an attachment unit to which the imaging unit or a tool is removably attached, the attachment unit moving to capture an image of a workpiece placed in the machine tool, the imaging unit capturing the image of the workpiece at an imaging position, the information processing device including a computation unit for: (i) calculating a position of the workpiece based on a captured image that is captured after the imaging unit has moved to a predetermined position based on machine coordinates of the machine tool; and (ii) detecting an edge of the workpiece from the two-dimensional captured image that is captured by the imaging unit at an imaging position after the imaging unit has been moved from the predetermined position to the imaging position, and calculating a length of the workpiece from a plurality of edges detected.

Advantageous Effects of Invention

According to the present invention, it is possible to provide a technique to measure a workpiece placed in a machine tool at a high speed.

Brief Description of Drawings

FIG. 1 is a diagram illustrating an outline of a machine tool.
FIG. 2 is a configuration diagram of a machining system.
FIG. 3 is an example of a machining drawing of a workpiece W.
FIG. 4 is a diagram illustrating an example of an edge detected from a captured image.
FIG. 5 is a diagram illustrating another example of an edge detected from an imaging center.
FIG. 6 is a diagram illustrating an example of a sequence in an embodiment.
FIG. 7 is a top view illustrating a placement state of the workpiece W in a modification.
FIG. 8 is a diagram illustrating an example of an edge detected from a captured image in the modification.
FIG. 9 is a diagram illustrating a sequence in the modification.
FIG. 10 is a diagram illustrating an example of measurement in the modification.
FIG. 11 is a diagram illustrating a sequence in the modification.
FIG. 12 is a diagram illustrating a captured image of a circular hole to be measured by offscreen measurement.
FIG. 13 is a diagram illustrating an editing screen of a measurement program.
FIG. 14 is a diagram illustrating a first display example of a stitching image on the editing screen of the measurement program.
FIG. 15 is a diagram illustrating a second display example of the stitching image on the editing screen of the measurement program.
FIG. 16 is a diagram illustrating an outline of edge detection.
FIG. 17 is a diagram illustrating an outline of chamfering amount measurement.

Description of Embodiments

A machining system to measure a workpiece placed on a machine tool according to an embodiment will be described below with reference to the drawings. Descriptions are provided below while constituent elements having identical configurations are denoted by like reference signs.

In the present embodiment, there is described a case where a machine tool is used. In the process of machining based on an NC (Numerical Control) program, when a tool is replaced with another tool to be used next based on the NC program, this tool can be automatically attached to an attachment unit (for example, the main shaft or turret) of the machine tool by an ATC (Automatic Tool Changer).

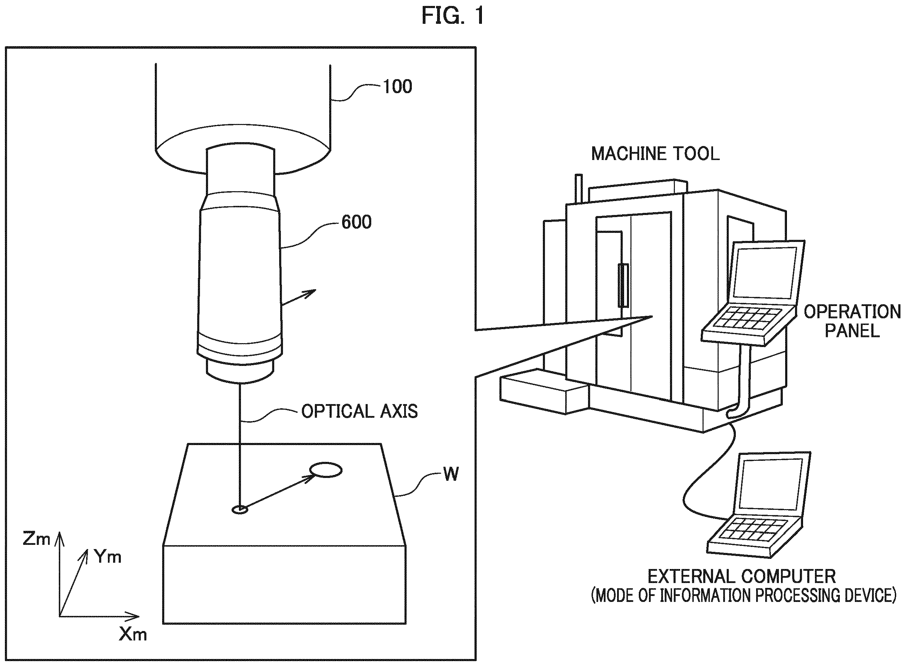

FIG. 1 is a diagram illustrating an outline of the machine tool.

The machine tool illustrated on the right side of FIG. 1 has a front door that can be opened and closed. FIG. 1 illustrates the door in the open position. The inside of the machine tool is illustrated on the left side of FIG. 1. The machine tool includes an operation panel. In addition, an external computer (a mode of an information processing device) is connected to the machine tool. The information processing device is not limited to the form of the external computer illustrated in FIG. 1. The operation panel may also serve as an information processing device. The mode in which the external computer is connected to the machine tool is merely an example. Another mode may also be employed in which the functions of the information processing device described below are included in the machine tool. The example of the machine tool illustrated in FIG. 1 is a vertical machining center. A main shaft 100 is provided above a workpiece W placed on the table. The main shaft 100 is rotatable about the axis in the vertical direction. A tool (not illustrated) is attached to the tip end of the main shaft 100.

The main shaft 100 is movable in the forward-rearward direction and the rightward-leftward direction. The machining position for the workpiece W is changed by horizontally moving the position of the main shaft 100. The main shaft 100 can also move in the vertical direction. The machine tool moves the main shaft 100 upward or downward to vary the distance between the workpiece W and the main shaft 100.

In the present embodiment, an imaging unit 600 can be attached to the main shaft 100, and is used for imaging the workpiece W. The machine tool has a configuration in which the imaging unit 600 can be automatically attached to and detached from the attachment unit by the ATC. The main shaft 100 is an example of "an attachment unit to which the imaging unit is removably attached". When the machine tool is a turning center, the turret corresponds to "an attachment unit of the machine tool". The imaging unit 600 may be attached to the turret to image the workpiece W. In a multifunction processing machine, the imaging unit 600 may be attached. In any of the cases, the imaging unit 600 is removably attached to "an attachment unit of the machine tool".

The imaging unit 600 receives an instruction from the information processing device, captures an image of a workpiece positioned in the machine tool, and transmits a two-dimensional captured image to the information processing device. The imaging unit 600 includes an imaging element, a lens, an illuminating device, and the like of a CMOS (Complementary Metal Oxide Semiconductor) image sensor or other type of sensor. The imaging unit 600 is capable of performing wired or wireless communication. The imaging unit 600 may be supplied with power through wires or wirelessly, or may include a storage battery.

Inside the machine tool, there is a machining space for attaching a tool to the attachment unit and machining a workpiece. The position in the closed machining space is defined by machine coordinates (Xm, Ym, Zm). The machine coordinate system defines the position base on the position and orientation in the machine tool. The machine tool operates based on the machine coordinates. It is assumed that the position of the origin of the machine coordinate system is defined in advance. The workpiece W is placed at a predetermined position in a predetermined orientation. The machine tool operates on the assumption that the workpiece W is placed in such a manner as described. In a case where the machine tool performs machining such as cutting, a cutting tool is attached to the main shaft 100, and an operation to move the main shaft 100 is combined with an operation to rotate the main shaft 100 to control the cutting tool so as to touch the workpiece W, while the cutting tool is rotated.

Conventionally, when checking the machining results of the workpiece W such as the diameter of a hole drilled on the workpiece W, a worker removes the workpiece W from the machine tool to measure the machining results using an instrument. Otherwise, without removing the workpiece W from the machine tool, the measurement is performed using a touch probe attached to the attachment unit.

In the present embodiment, the imaging unit 600 captures an image of the workpiece W placed in the machine tool to analyze the captured image, and measure the machining results. In the present embodiment, an image probe attachable to/detachable from the attachment unit is used to serve as the imaging unit 600, such that the cutting results of the workpiece W can be continuously measured while the workpiece W remains fixed in the same state as being cut in the machine tool. In the attachment unit, a tool and the imaging unit 600 are replaceable with each other. The tool attached to the attachment unit machines the workpiece W, and the imaging unit 600 attached to the attachment unit images the workpiece W. After the workpiece W is machined with the tool in the machine tool, the tool attached to the attachment unit is returned to a storage unit. Instead, the imaging unit 600 in the storage unit is attached to the attachment unit. The imaging unit 600 attached to the attachment unit moves to a position where the imaging unit 600 images the workpiece W, and captures an image of the workpiece W. In such a machine tool as described above, it is unnecessary to remove the workpiece W from the machine tool and measure the workpiece W outside the machine tool. The workpiece W can be machined and imaged by moving the attachment unit. During the execution of a measurement program (imaging mode), the attachment unit having the imaging unit 600 attached thereto moves to the machine coordinates corresponding to the position of the machine-processing origin of the workpiece W. There, the imaging unit 600 captures an image and acquires the captured image. Edge detection of the workpiece W is performed from the captured image. The machine-processing origin in the present embodiment is positioned at one of the corners of the rectangle when the workpiece W is viewed in the direction from the topside. Therefore, the edge at the corner is checked against the position of the machine coordinates corresponding to the machine-processing origin. When the position of the corner of the workpiece W coincides with the position of the machine coordinates corresponding to the machine-processing origin, then the attachment unit is moved to the measurement position of the workpiece W in accordance with a process of the measurement program. For example, if it is desired to measure the diameter of a hole formed by drilling, the attachment unit is moved from the imaging position for checking against the machine-processing origin to an imaging position for imaging the hole on the workpiece W. Then, an image is captured so as to photograph the hole on the workpiece W. Furthermore, after the hole is drilled on the workpiece W, air is blown or coolant is discharged to the workpiece W to remove shavings from the measurement area (surface) of the workpiece W. After the shavings are removed in this manner, the measurement described in the present embodiment and modifications may be performed. Accordingly, in the machining process, the measurement can be performed with the door kept closed. In this case, the machine tool includes an air blower that blows air to the workpiece W, or a coolant discharge unit that can discharge coolant toward the workpiece W.

The door can be opened to change the tools. During the process of machining, an image of the workpiece W can be captured by the imaging unit 600 to extract the edge and surface of the workpiece W from the captured image as feature points. For example, machining may be temporarily stopped with the door closed, and the workpiece W may be imaged by the imaging unit 600 without opening the door. Thereafter, without opening the door, a correction value of the tool can be modified on the operation panel and the machining can be resumed. It is possible not only to modify the correction value of the tool on the operation panel, but also to change the rotational speed of the tool and other parameters.

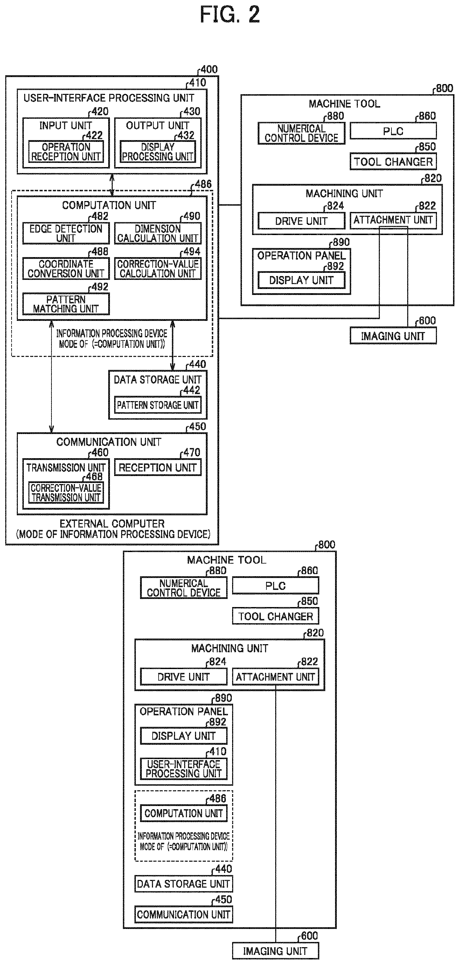

The upper section of FIG. 2 illustrates a configuration of the machining system in a first mode.

A machine tool 800 includes a machining unit 820, a tool changer 850, a PLC (Programmable Logic Controller) 860, and a numerical control device 880. The machining unit 820 performs machining on a workpiece. The machining unit 820 includes an attachment unit 822 to which a tool or the imaging unit 600 is attached, and a drive unit 824 such as a servo motor that rotates the shaft. In a case where the machine tool 800 is a machining center, the main shaft 100 corresponds to the attachment unit 822, and the servo motor that rotates the main shaft 100 corresponds to the drive unit 824. The drive unit 824 of the machining center also operates to move the attachment unit 822 (the main shaft) having the imaging unit 600 attached thereto. In a case where the machine tool 800 is a turning center, the turret corresponds to the attachment unit 822. The machine tool 800 includes the drive unit 824 that moves the turret in addition to the servo motor that rotates the rotational shaft having a workpiece attached thereto. The drive unit 824 of the turning center also operates to move the attachment unit 822 (the turret) having the imaging unit 600 attached thereto. The numerical control device 880 executes the NC program to operate the machining unit 820 of the machine tool 800 in accordance with the codes specified in the NC program. The numerical control device 880 also provides an instruction to change the tool or the imaging unit 600 in the process of executing the NC program. The machining unit 820 includes a tool magazine capable of accommodating therein many tools and the imaging unit 600 to be attached to the attachment unit.

The external computer 400 (a mode of the information processing device) is connected to the machine tool 800 through a communication line. Furthermore, the external computer 400 is capable of communicating with the imaging unit 600. In a case of performing wired communication, the external computer 400 and the imaging unit 600 are connected by a communication line running through the inside of the attachment unit 822. Wireless communication via a wireless LAN, etc. may also be performed between the external computer 400 and the imaging unit 600. An image captured by the imaging unit 600 is transmitted from the attachment unit 822 through wired communication to the external computer 400. An image captured by the imaging unit 600 may be transmitted to the external computer 400 through wireless communication. The external computer 400 is a mode of the information processing device.

A functional block of the external computer 400 is now described. Each constituent element of the external computer 400 is implemented by hardware and software. The hardware includes computation devices such as a CPU (Central Processing Unit) and various coprocessors, storage devices such as a memory and a storage, and a wired or wireless communication line connecting these devices. The software is stored in the storage device and supplies a processing command to the computation devices. A computer program may be made up of a device driver, an operating system, various application programs on the upper layer of these device driver and operating system, and a library that provides the common functions to these application programs. Blocks to be described below do not refer to configurations in units of hardware but to blocks in units of functions.

The external computer 400 includes a user-interface processing unit 410, a data storage unit 440, a communication unit 450, and a computation unit 486. The user-interface processing unit 410 is configured to perform user interface processing via a display, a keyboard, a mouse, a touch sensor, a touch panel in which the display and the touch sensor are integrated, and the like included in the external computer 400. The data storage unit 440 stores therein various types of data. The data storage unit 440 is implemented by, for example, a RAM, a ROM, a flash memory, an SSD (Solid State Device), a hard disk, or other storage device, or is implemented by an appropriate combination thereof. The communication unit 450 is configured to perform communication processing to communicate with the machine tool 800 and the imaging unit 600. The computation unit 486 performs various types of processing based on the data acquired by the communication unit 450 and the data stored in the data storage unit 440. The computation unit 486 also functions as an interface of the user-interface processing unit 410, the data storage unit 440, and the communication unit 450.

The user-interface processing unit 410 includes an input unit 420 that inputs data through a user's operation, and an output unit 430 that outputs data to be provided to the user.

The input unit 420 includes an operation reception unit 422 that receives a data input upon an event detected by an input device such as a keyboard, a mouse, a touch sensor, or a touch panel. The output unit 430 includes a display processing unit 432 that displays various types of screens on a display device such as the display or the touch panel.

The computation unit 486 detects an edge of the workpiece W from a two-dimensional captured image, and performs computation processing based on the edge detected in the captured image.

The computation unit 486 includes an edge detection unit 482, a coordinate conversion unit 488, a dimension calculation unit 490, a pattern matching unit 492, and a correction-value calculation unit 494. The edge detection unit 482 detects an edge of the workpiece W from a two-dimensional captured image. The coordinate conversion unit 488 converts the coordinates between the machine coordinates and the coordinates in the captured image (hereinafter, referred to as "imaging coordinates") to each other. The coordinate conversion unit 488 may convert the coordinates between the machine coordinates and the coordinates that define the machine-processing position on the workpiece W (hereinafter, referred to as "machine-processing coordinates") to each other, and may convert the coordinates between the imaging coordinates and the machine-processing coordinates to each other. The dimension calculation unit 490 calculates the dimension of the overall shape or partial shape (for example, a circular hole) of the workpiece W (the dimension is, for example, the diameter of the circular hole). The computation unit 486 is a mode of the information processing device. The external computer 400 in its entirety (including the computation unit 486) may be regarded as the information processing device, or only the computation unit 486 itself may be regarded as the information processing device. The computation unit 486 may also be operated by an independent hardware resource. For example, the computation unit 486 may use a microcomputer including a processor and a memory as a hardware resource. The functions of the computation unit 486 may be implemented by storing a program defining the processing performed by the functions of the computation unit 486 in the memory of the microcomputer, and executing the program by the processor of the microcomputer.

The pattern matching unit 492 performs pattern matching on the shape of an edge detected in a captured image. The pattern matching unit 492 is described later in a second modification. The correction-value calculation unit 494 calculates a correction value for correcting the placement error of the workpiece W. The correction-value calculation unit 494 is described later in a fourth modification and a fifth modification.

The data storage unit 440 includes a pattern storage unit 442 that stores therein data about a plurality of patterns that are used in the pattern matching unit 492.

The communication unit 450 includes a transmission unit 460 that transmits data to the machine tool 800 and the imaging unit 600, and a reception unit 470 that receives data from the machine tool 800 and the imaging unit 600.

The transmission unit 460 includes a transmission unit 262 that transmits a correction value for correcting the placement error of the workpiece W to the machine tool 800.

The machine tool 800 includes an operation panel 890. The operation panel 890 includes, for example, a display unit 892 such as a liquid crystal display, and hardware resources such as a processor and a memory. On the display unit 892 on the operation panel 890, processing results of the information processing device such as the external computer 400 may be displayed. For example, the external computer 400 transmits the processing results to the operation panel 890, and the operation panel 890 receives the processing results and displays them on the display unit 892.

The lower section of FIG. 2 illustrates the machining system in a second mode.

The machine tool 800 may include the computation unit 486, the data storage unit 440, and the communication unit 450 that are illustrated in the upper section of FIG. 2. For example, the machine tool 800 includes hardware resources equivalent to the external computer 400. Each functional block illustrated in the lower section of FIG. 2 is implemented by using the hardware resources. Similarly to the first mode, the computation unit 486 includes the edge detection unit 482, the coordinate conversion unit 488, the dimension calculation unit 490, the pattern matching unit 492, and the correction-value calculation unit 494 (see the upper section of FIG. 2). The data storage unit 440 includes the pattern storage unit 442 (see the upper section of FIG. 2). The communication unit 450 includes the transmission unit 460 including the correction-value transmission unit 468, and the reception unit 470 (see the upper section of FIG. 2). The operation panel 890 includes the display unit 892 that serves as hardware, and the user-interface processing unit 410 that serves as a functional block (see the upper section of FIG. 2). The user-interface processing unit 410 includes the input unit 420 including the operation reception unit 422, and the output unit 430 including the display processing unit 432 (see the upper section of FIG. 2). The computation unit 486 in the second mode is also a mode of the information processing device. The computation unit 486 may also be operated by an independent hardware resource. For example, the computation unit 486 may use a microcomputer including a processor and a memory as a hardware resource. The functions of the computation unit 486 may be implemented by storing a program defining the processing performed by the functions of the computation unit 486 in the memory of the microcomputer, and executing the program by the processor of the microcomputer. In the second mode, it is possible for the machine tool 800 to internally execute all the processing including the processing performed in the information processing device. The processing results of the information processing device are displayed, for example, on the display unit of the operation panel 890.

When the tool or the imaging unit 600 attached to the attachment unit 822 is changed, the numerical control device 880 transmits a tool change command to the PLC 860. When receiving the tool change command, the PLC 860 controls the tool changer 850 in accordance with the received command to replace the tool attached to the main shaft 100 with a tool accommodated in the tool magazine of the tool changer 850. In this example, in the same manner as the tool, the imaging unit 600 is attached to or detached from the attachment unit 822 by the tool changer 850.

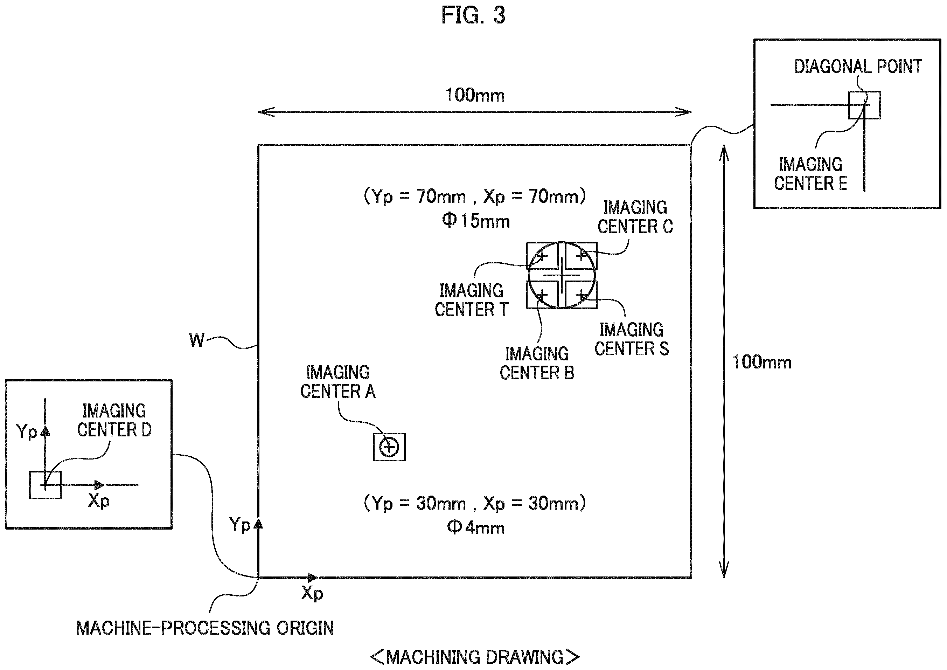

FIG. 3 illustrates an example of the machining drawing of the workpiece W.

In accordance with the machining drawing, machining is performed on the workpiece W. The top surface of the workpiece W in this example is a square with each side being 100 mm. The machining drawing illustrates the machine-processing coordinates on the top surface of the workpiece W when viewed from the imaging unit 600. The machine-processing coordinates refer to the coordinates that define the machine-processing position for the workpiece W. The origin of the machine-processing coordinate system is referred to as "machine-processing origin". The machine-processing origin is expressed as (Xp=0 mm, Yp=0 mm). The machine-processing origin in this example is the lower left corner point of the workpiece W. The rightward direction in the machining drawing shows the positive direction of Xp. The upward direction in the machining drawing shows the positive direction of Yp. A position on the top surface of the workpiece W is defined by the machine-processing coordinates (Xp, Yp).

The example of this machining drawing shows that machining is performed to drill two circular holes on the top surface of the workpiece W. A hole with a diameter of 4 mm (hereinafter, referred to as "first hole") is drilled with its center at (Yp=30 mm, Xp=30 mm) on the lower left side. In addition, a hole with a diameter of 15 mm (hereinafter, referred to as "second hole") is drilled with its center at (Xp=70 mm, Yp=70 mm) on the upper right side.

In the machining drawing, the position of the machine-processing origin (Xp=0 mm, Yp=0 mm) is specified by predetermined machine coordinates as a condition for placing the workpiece W. That is, the workpiece W is placed in such a manner that the machine-processing origin is positioned at the predetermined machine coordinates. In the descriptions below, the machine coordinates of the machine-processing origin are assumed to be (Xm=100, Ym=100).

As another condition for placing the workpiece W, the orientation of the workpiece W is specified. The direction of Xp of the machine-processing coordinates is aligned with the direction of Xm of the machine coordinates. The direction of Yp of the machine-processing coordinates is aligned with the direction of Ym of the machine coordinates.

On the premise of the machining drawing and the conditions for placing described above, an imaging condition for measuring the machining results is determined. Specifically, the position of the center of a captured image (referred to as "imaging center") is determined as an imaging condition. For example, in the trial production phase, a worker may determine the imaging condition at any timing during the machining process. For another example, in the mass production phase, an imaging condition may be determined in advance during the planning of the production process.

After drilling of the first hole and the second hole, the machining system measures the first hole and the second hole formed by the drilling. As a condition for imaging the first hole, the center of the first hole (Xp=30 mm, Yp=30 mm) is set as an imaging center A. The imaging region is the inside of the rectangle defined by the thin lines around the imaging center A as illustrated. Since the first hole in its entirety falls inside the imaging region, measurement of the first hole is completed by a single imaging. In a case where a measurement target in its entirety falls inside the imaging region as described above, the measurement is referred to as "on-screen measurement".

When the machine coordinates of the imaging center A are expressed as (Xm (imaging center A), Ym (imaging center A)), Xm (imaging center A) is calculated as 100 mm+30 mm=130 mm, and Ym (imaging center A) is calculated as 100 mm+30 mm=130 mm.

Since the second hole does not fit within the imaging region, a plurality of areas of the second hole are imaged. In this example, two areas are imaged, and based on the two captured images, the measurement of the second hole is performed. In a case where a measurement target in its entirety does not fit within the imaging region as described above, the measurement is referred to as "offscreen measurement".

As a condition for the first imaging of the second hole, a predetermined position (Xp=66 mm, Yp=66 mm) on the lower left side relative to the center of the second hole is set as an imaging center B. The first imaging region is the inside of the rectangle defined by the thin lines around the imaging center B illustrated. As a condition for the second imaging of the second hole, a predetermined position (Xp=74 mm, Yp=74 mm) on the upper right side relative to the center of the second hole is set as an imaging center C. The second imaging region is the inside of the rectangle defined by the thin lines around the imaging center C illustrated.

When the machine coordinates of the imaging center B are expressed as (Xm (imaging center B), Ym (imaging center B)), Xm (imaging center B) is calculated as 100 mm+66 mm=166 mm, and Ym (imaging center B) is calculated as 100 mm+66 mm=166 mm. When the machine coordinates of the imaging center C are expressed as (Xm (imaging center C), Ym (imaging center C)), Xm (imaging center C) is calculated as 100 mm+74 mm=174 mm, and Ym (imaging center C) is calculated as 100 mm+74 mm=174 mm.

Next, measurement of the first hole is described.

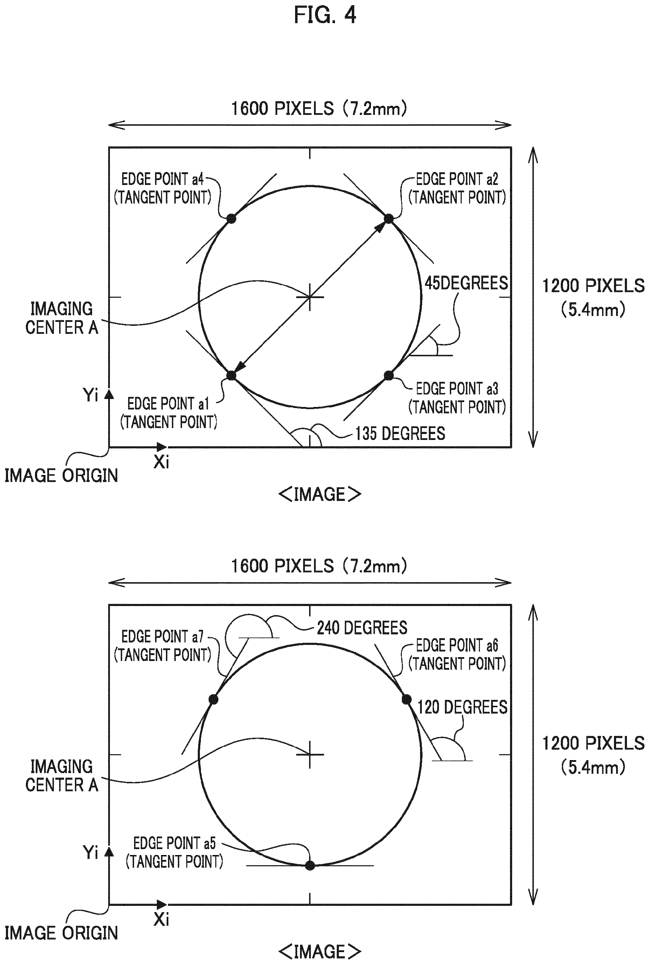

The top diagram of FIG. 4 illustrates the edge (boundary line) detected from the captured image with the imaging center A.

The captured image in this example has a size of 1600×1200 pixels. The resolution in this example is 4.5 μm/pixel. Therefore, the captured image covers a region of 5.4 mm×7.2 mm in actual size. The origin of the captured image system (referred to as "image origin") is the lower left corner point. The rightward direction shows the positive direction of Xi. The upward direction shows the positive direction of Yi. The image origin is expressed as (Xi=0 pixels, Yi=0 pixels).

The illustrated circle shows the edge (boundary line) detected by the edge detection unit 482 from the captured image with the optical axis of the imaging unit 600 focusing on the imaging center A. The edge represents the contour of the first hole. The external computer 400 (an example of the information processing device) measures the positions at two points on the edge line to obtain the diameter of the first hole machined. Hereinafter, the point on the edge line is referred to as "edge point". An edge point a1 is the lower left point of the circle at which the tangent line forms a predetermined angle (135 degrees in this example) counterclockwise relative to the Xi-axis. An edge point a2 is the upper right point of the circle at which the tangent line forms a predetermined angle (135 degrees in this example) counterclockwise relative to the Xi-axis. The edge detection unit 482 identifies the tangent lines at the predetermined angle described above through image analysis, and detects the tangent points where the tangent line overlaps the edge as the edge point a1 and the edge point a2.

The image coordinates of the edge point a1 are expressed as (Xi (edge point a1), Yi (edge point a1)). The coordinate conversion unit 488 converts the image coordinates of the edge point a1 detected by the edge detection unit 482 to machine coordinates in accordance with the procedure below. The machine coordinates of the edge point a1 are expressed as (Xm (edge point a1), Ym (edge point a1)).

Xm (edge point a1) is calculated by the following Equation 1.

$$\text{Xm (edge point a1)} = \text{Xm (imaging center A)} + R\times(\text{Xi (edge point a1)} - \text{Xi (imaging center A)}) \quad \text{... (Equation 1)}$$

Xm (imaging center A) is equal to 130 mm. R represents the resolution (4.5 pm/pixel). Xi (edge point a1) is detected as an image coordinate of the tangent point through image analysis. Xi (imaging center A) is equal to 800 pixels.

Ym (edge point a1) is calculated by the following Equation 2.

$$\text{Ym (edge point a1)} = \text{Ym (imaging center A)} + R\times(\text{Yi (edge point a1)} - \text{Yi (imaging center A)}) \quad \text{... (Equation 2)}$$

Ym (imaging center A) is equal to 130 mm. R represents the resolution (4.5 pm/pixel). Yi (edge point a1) is detected as an image coordinate of the tangent point through image analysis. Yi (imaging center A) is equal to 600 pixels.

The coordinate conversion unit 488 converts the image coordinates of the edge point a2 (Xm (edge point a2), Ym (edge point a2)) detected by the edge detection unit 482 to machine coordinates in accordance with the procedure below. The machine coordinates of the edge point a2 are expressed as (Xm (edge point a2), Ym (edge point a2)).

Xm (edge point a2) is calculated by the following Equation 3.

$$\text{Xm (edge point a2)} = \text{Xm (imaging center A)} + R\times(\text{Xi (edge point a2)} - \text{Xi (imaging center A)}) \quad \text{... (Equation 3)}$$

Xm (imaging center A) is equal to 130 mm. R represents the resolution (4.5 $\mu$m/pixel). Xi (edge point a2) is detected as an image coordinate of the tangent point through image analysis. Xi (imaging center A) is equal to 800 pixels.

Ym (edge point a2) is calculated by the following Equation 4.

$$\text{Ym (edge point a2)} = \text{Ym (imaging center A)} + R\times(\text{Yi (edge point a2)} - \text{Yi (imaging center A)}) \quad \text{... (Equation 4)}$$

Ym (imaging center A) is equal to 130 mm. R represents the resolution (4.5 um/pixel). Yi (edge point a2) is detected as an image coordinate of the tangent point through image analysis. Yi (imaging center A) is equal to 600 pixels.

The dimension calculation unit 490 calculates the distance between the machine coordinates of the edge point a1 (Xm (edge point a1), Ym (edge point a1)) and the machine coordinates of the edge point a2 (Xm (edge point a2), Ym (edge point a2)). This distance is the diameter of the first hole. The dimension calculation unit 490 calculates the machine coordinates of the midpoint between the machine coordinates of the edge point a1 and the machine coordinates of the edge point a2. The machine coordinates of the midpoint shows the position of the center of the first hole. The dimension calculation unit 490 may obtain the radius of the first hole by dividing the diameter of the first hole by two.

The dimension calculation unit 490 may calculate the diameter of the first hole based on the distance between the image coordinates without converting the image coordinates to machine coordinates. In that case, the dimension calculation unit 490 calculates the pixel length between the image coordinates of the edge point a1 (Xi (edge point a1), Yi (edge point a1)) and the image coordinates of the edge point a2 (Xi (edge point a2), Yi (edge point a2)), and multiplies the pixel length by the resolution (4.5 $\mu$m/pixel) to calculate the diameter of the first hole. The diameter of the first hole can also be calculated based on an edge point a3 and an edge point a4 in the same manner as described above. The edge point a3 is the lower right point of the circle at which the tangent line forms a predetermined angle (45 degrees in this example) counterclockwise relative to the Xi-axis. The edge point a4 is the upper left point of the circle at which the tangent line forms a predetermined angle (45 degrees in this example) counterclockwise relative to the Xi-axis. If the diameter calculated based on the edge points a1 and a2 does not correspond with the diameter calculated based on the edge points a3 and a4, the average value of the calculated diameters may be used, or the imaging process may be restarted. If noise included in the captured image affects the measurement, the non-correspondence may be resolved by capturing an image again.

Subsequently, measurement of the second hole is described.

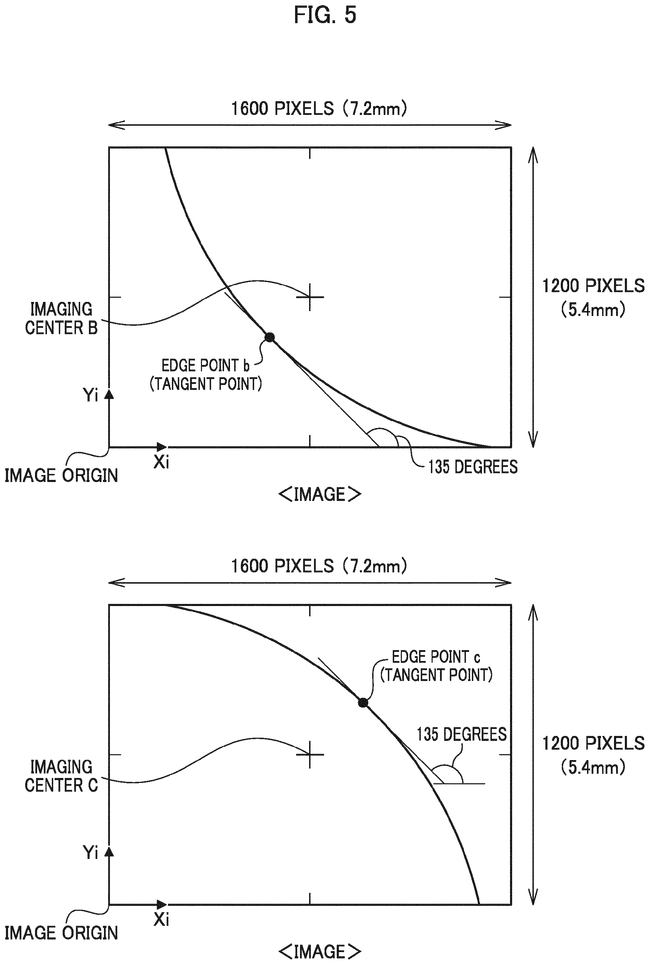

The top diagram of FIG. 5 illustrates the edge (boundary line) detected from the captured image with the imaging center B.

The illustrated arc shows the edge (boundary line) detected by the edge detection unit 482 from the captured image with the optical axis of the imaging unit 600 focusing on the imaging center B. The edge represents the lower left arc of the contour of the second hole. The external computer 400 (an example of the information processing device) measures the position of an edge point b on the edge line. The edge point b is on the lower left arc at which the tangent line forms a predetermined angle (135 degrees in this example) counterclockwise relative to the Xi-axis. The edge detection unit 482 identifies the tangent line at the predetermined angle described above through image analysis, and detects the tangent point where the tangent line overlaps the edge as the edge point b.

The image coordinates of the edge point b are expressed as (Xi (edge point b), Yi (edge point b)). The coordinate conversion unit 488 converts the image coordinates of the edge point b detected by the edge detection unit 482 to machine coordinates in accordance with the procedure below. The machine coordinates of the edge point b are expressed as (Xm (edge point b), Ym (edge point b)).

Xm (edge point b) is calculated by the following Equation 5.

$$\text{Xm (edge point b) = Xm (imaging center B) + R×(Xi (edge point b) - Xi (imaging center B)) ... (Equation 5)}$$

Xm (imaging center B) is equal to 166 mm. R represents the resolution (4.5 $\mu$m/pixel). Xi (edge point b) is detected as an image coordinate of the tangent point through image analysis. Xi (imaging center B) is equal to 800 pixels.

Ym (edge point b) is calculated by the following Equation 6.

$$\text{Ym (edge point b) = Ym (imaging center B) + R×(Yi (edge point b) - Yi (imaging center B)) ... (Equation 6)}$$

Ym (imaging center B) is equal to 166 mm. R represents the resolution (4.5 um/pixel). Yi (edge point b) is detected as an image coordinate of the tangent point through image analysis. Yi (imaging center B) is equal to 600 pixels.

The bottom diagram of FIG. 5 illustrates the edge (boundary line) detected from the captured image with the imaging center C.

The illustrated arc shows the edge (boundary line) detected by the edge detection unit 482 from the captured image with the optical axis of the imaging unit 600 focusing on the imaging center C. The edge represents the upper right arc of the contour of the second hole. The external computer 400 (an example of the information processing device) measures the position of an edge point c on the edge line. The edge point c is on the upper right arc at which the tangent line forms a predetermined angle (135 degrees in this example) counterclockwise relative to the Xi-axis. The edge detection unit 482 detects the edge point c through image analysis.

The image coordinates of the edge point c are expressed as (Xi (edge point c), Yi (edge point c)). The coordinate conversion unit 488 converts the image coordinates of the edge point c detected by the edge detection unit 482 to machine coordinates in accordance with the procedure below. The machine coordinates of the edge point c are expressed as (Xm (edge point c), Ym (edge point c)).

Xm (edge point c) is calculated by the following Equation 7.

$$\text{Xm (edge point c) = Xm (imaging center C) + R×(Xi (edge point c) - Xi (imaging center C)) ... (Equation 7)}$$

Xm (imaging center C) is equal to 174 mm. R represents the resolution (4.5 $\mu$m/pixel). Xi (edge point c) is detected as an image coordinate of the tangent point through image analysis. Xi (imaging center C) is equal to 800 pixels.

Ym (edge point c) is calculated by the following Equation 8.

$$Ym \text{ (edge point c)} = Ym \text{ (imaging center C)} + R\times(Yi \text{ (edge point}$$

$$c) - Yi \text{ (imaging center C))} \quad \dots \text{ (Equation 8)}$$

Ym (imaging center C) is equal to 174 mm. R represents the resolution (4.5 um/pixel). Yi (edge point c) is detected as an image coordinate of the tangent point through image analysis. Yi (imaging center C) is equal to 600 pixels.

The dimension calculation unit 490 calculates the distance between the machine coordinates of the edge point b (Xm (edge point b), Ym (edge point b)) and the machine coordinates of the edge point c (Xm (edge point c), Ym (edge point c)). This distance is the diameter of the second hole. The dimension calculation unit 490 calculates the machine coordinates of the midpoint between the machine coordinates of the edge point b and the machine coordinates of the edge point c. The machine coordinates of the midpoint shows the position of the center of the second hole. The dimension calculation unit 490 may obtain the radius of the first hole by dividing the diameter of the second hole by two.

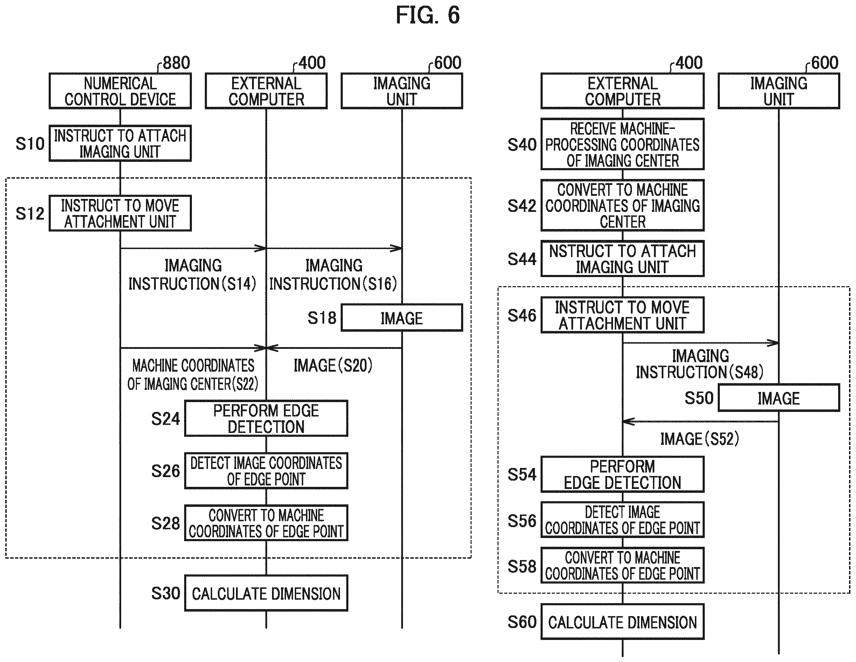

FIG. 6 illustrates, on its left side, the first example of the sequence according to the embodiment.

In the first example, the timing of the measurement process by imaging is defined in the NC program. This sequence is used, for example, in the mass production phase.

At the stage of completion of predetermined machining (drilling of the first hole or the second hole in this example) in accordance with the NC program, the illustrated sequence is entered.

The numerical control device 880 instructs the PLC 860 to attach the imaging unit 600 (S10). In accordance with the instruction, the PLC 860 controls the tool changer 850 to replace the tool attached to the attachment unit 822 (the main shaft 100) with the imaging unit 600 accommodated in the tool magazine of the tool changer 850, and attach the imaging unit 600 to the attachment unit 822 (the main shaft 100).

The numerical control device 880 instructs the drive unit 824 to move the attachment unit 822 (the main shaft 100) such that the optical axis of the imaging unit 600 focuses on the machine coordinates of a predetermined imaging center (for example, the imaging center A, the imaging center B, or the imaging center C described above) (S12). The drive unit 824 moves the attachment unit 822 (the main shaft 100) in accordance with the instruction. It is assumed that the center axis of the attachment unit 822 (the main shaft 100) coincides with that of the imaging unit 600.

The numerical control device 880 transmits an imaging instruction to the external computer 400 (an example of the information processing device) (S14). When the reception unit 470 in the external computer 400 receives the imaging instruction, the transmission unit 460 in the external computer 400 transmits the imaging instruction to the imaging unit 600 (S16).

When receiving the imaging instruction, the imaging unit 600 captures an image of the workpiece (S18). The imaging unit 600 transmits the captured image obtained to the external computer 400 (an example of the information processing device) (S20).

The numerical control device 880 transmits the machine coordinates of the imaging center focused in S12 to the external computer 400 (an example of the information processing device) (S22). The reception unit 470 in the external computer 400 receives the machine coordinates of the imaging center and the captured image. The edge detection unit 482 in the external computer 400 (an example of the information processing device) detects the edge in the captured image through image analysis (S24). The edge detection unit 482 detects the image coordinates of a predetermined edge point (for example, the edge point a1, the edge point a2, the edge point b, or the edge point c described above) through image analysis (S26). The coordinate conversion unit 488 converts the image coordinates of the detected edge point to machine coordinates (S28).

In a case of the above first hole, an image is captured once, and thus the sequence of processes within the broken line is performed once. Then, two edge points are detected from a single captured image. In contrast, an image of the second hole is captured twice, and a single edge point is detected from each captured image. Accordingly, the sequence of processes within the broken line is performed twice.

The dimension calculation unit 490 in the external computer 400 (an example of the information processing device) calculates the diameter of the first hole and the diameter of the second hole individually based on the machine coordinates of the two edge points (S30). Furthermore, the dimension calculation unit 490 calculates the machine coordinates of the center of the first hole and the machine coordinates of the center of the second hole. The display processing unit 432 in the external computer 400 or the operation panel 890 displays the captured image and the dimensions measured (the diameter and the center) on the screen of the display device. The external computer 400 (an example of the information processing device) may calculate and display the radius of the first hole and the radius of the second hole.

FIG. 6 illustrates, on its right side, the second example of the sequence according to the embodiment.

In the second example, a worker operates the external computer 400 or the operation panel 890 to perform the measurement process by imaging at any timing. This sequence is used, for example, in the trial production phase.

The display processing unit 432 in the external computer 400 or the operation panel 890 displays the machining drawing on the screen of the display device. The machining drawing is stored in the data storage unit 440. Referring to the machining drawing, the worker specifies the machine-processing coordinates of the imaging center. The worker may input numerical values of the machine-processing coordinates, or may input the machine-processing coordinates by clicking or touching the machining drawing on the display. Upon this user's operation, the operation reception unit 422 in the external computer 400 or the operation panel 890 receives the machine-processing coordinates of the imaging center (S40).

The coordinate conversion unit 488 in the external computer 400 (an example of the information processing device) converts the machine-processing coordinates of the imaging center to machine coordinates of the imaging center. Specifically, the machine coordinates of the imaging center are obtained by adding the machine-processing coordinates of the imaging center to the machine coordinates of the machine-processing origin (S42).

The external computer 400 (an example of the information processing device) instructs the numerical control device 880 to attach the imaging unit 600 (S44). This process and operation are the same as those in S10.

The external computer 400 (an example of the information processing device) instructs the numerical control device 880 to move the attachment unit 822 (the main shaft 100) to the machine coordinates of the imaging center (S46). At this time, the machining system operates in the same manner as in S12. The process and operation in S48 to S60 are the same as those in S16 to S20 and in S24 to S36.

Other than the first and second examples, a worker may manually actuate the attachment unit 822 (the main shaft 100) to move the attachment unit 822 (the main shaft 100) above a workpiece. In this method, the external computer 400 (an example of the information processing device) acquires the machine coordinates of the imaging center from the machine tool 800. The machine coordinates of the imaging center are at the position of the center axis of the attachment unit 822 (the main shaft 100).

[First modification]

In the embodiment, an example of the on-screen measurement has been described in which the positions of two points on the edge are measured, and based on the positions of the two measurement points, the diameter of the circular hole is calculated. In the on-screen measurement, the positions of three or more points on the edge may also be measured, and based on the positions of the three or more measurement points, the diameter of the circular hole may be calculated. In the on-screen measurement, three-point measurement has higher measurement accuracy than two-point measurement. In the on-screen measurement, the number of measurement points may be four or more. As the number of measurement points increases, measurement accuracy further improves.

The bottom diagram in FIG. 4 illustrates an example of the three-point measurement in the first modification.

In this example, the edge detection unit 482 detects the image coordinates of each of the edge points in the on-screen measurement. The edge points are a tangent point on the tangential line forming an angle of 0 degree relative to the Xi-axis of the captured image system, a tangent point on the tangential line forming an angle of 120 degrees relative to the Xi-axis of the captured image system, and a tangent point on the tangential line forming an angle of 240 degrees relative to the Xi-axis of the captured image system. The dimension calculation unit 490 calculates the diameter of the circular hole based on the image coordinates of these three edge points through geometric analysis. Otherwise, the coordinate conversion unit 488 converts the image coordinates of each edge point to machine coordinates, and the dimension calculation unit 490 calculates the diameter of the circular hole based on the machine coordinates of the three edge points through geometric analysis.

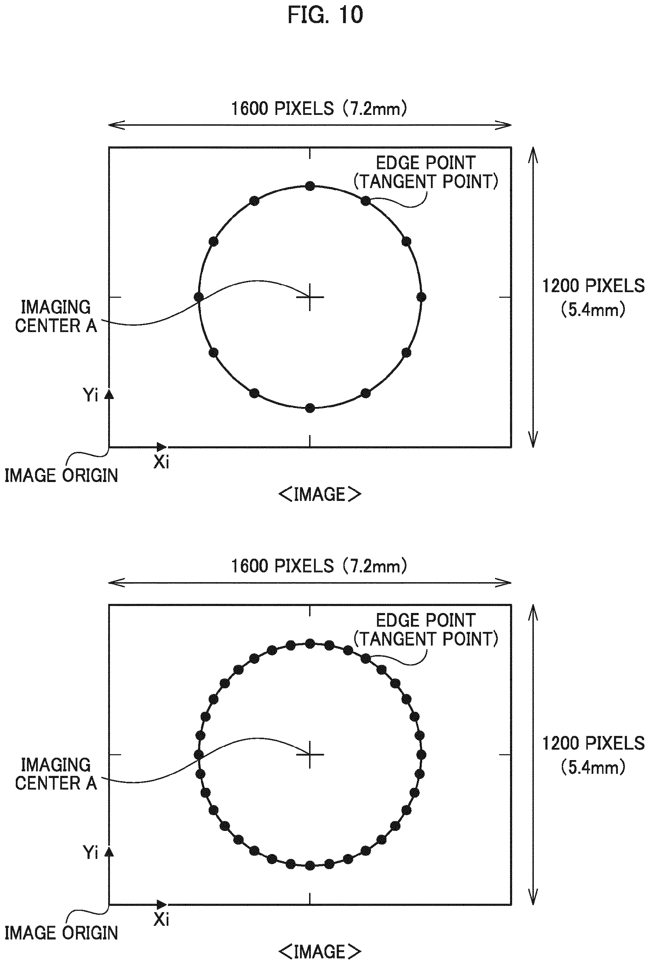

The top diagram in FIG. 10 illustrates an example of 12-point measurement in the first modification.

In this example, the edge detection unit 482 detects the image coordinates of each of the edge points that are 12 tangent points in the on-screen measurement. The dimension calculation unit 490 calculates the diameter of the circular hole based on the image coordinates of these 12 edge points through geometric analysis. Otherwise, the coordinate conversion unit 488 converts the image coordinates of each of the 12 edge points to machine coordinates, and the dimension calculation unit 490 calculates the diameter of the circular hole based on the machine coordinates of the 12 edge points through geometric analysis. At this time, the diameter of the circular hole is calculated by using the distance from the center to each edge point excluding the outlier point equal to or greater than the standard deviation. This can improve the calculation accuracy.

The bottom diagram in FIG. 10 illustrates an example of 36-point measurement in the first modification.

In the on-screen measurement, each of the edge points that are 36 tangent points may be measured. When there are 36 edge points, the edge points are measured at a pitch of 10 degrees. Although not illustrated, the measurement may be performed based on, for example, 18 edge points. When there are 18 edge points, the edge points are measured at a pitch of 20 degrees. It is preferable that the measurement is performed using four or more edge points to 36 or less edge points in a single image. The processing method is the same as that described above.

In the embodiment, an example of the offscreen measurement has been described in which the positions of two points on the edge are measured in two captured images, and based on the positions of the two measurement points, the diameter of the circular hole is calculated. In the offscreen measurement, the positions of three or more points on the edges may also be measured in three or more captured images, and based on the positions of the three or more measurement points, the diameter of the circular hole may be calculated. In the offscreen measurement, three-point measurement has higher measurement accuracy than two-point measurement. In the offscreen measurement, the number of measurement points may be four or more. As the number of measurement points increases, measurement accuracy further improves.

In a case of offscreen measurement in which three-point measurement is performed, images of three areas are captured. The three areas are the region including a tangent point on the tangential line forming an angle of 0 degree relative to the Xi-axis of the captured image system, the region including a tangent point on the tangential line forming an angle of 120 degrees relative to the Xi-axis of the captured image system, and the region including a tangent point on the tangential line forming an angle of 240 degrees relative to the Xi-axis of the captured image system. The edge detection unit 482 detects the image coordinates of the respective edge points in the three captured images. The coordinate conversion unit 488 converts the image coordinates of each of the edge points to machine coordinates. The dimension calculation unit 490 calculates the diameter of the circular hole based on the machine coordinates of the three edge points through geometric analysis.

For example, in a case of offscreen measurement in which 12-point measurement is performed, images of 12 areas are captured, each of which includes each of the 12 tangent points. The edge detection unit 482 detects the image coordinates of the edge points in the 12 captured images. The coordinate conversion unit 488 converts the image coordinates of each of the edge points to machine coordinates. The dimension calculation unit 490 calculates the diameter of the circular hole based on the machine coordinates of the 12 edge points through geometric analysis. In the same manner as in the on-screen measurement, the diameter of the circular hole is calculated by using the distance from the center to each edge point excluding the outlier point equal to or greater than the standard deviation. This can improve the calculation accuracy. In a case of offscreen measurement in which 36-point measurement is performed, the processing is performed in the same manner as the processing when 12-point measurement is performed, except that the number of measurement points is different from that in the 12-point measurement. When the distance between edge points is short, two edge points may be photographed together in a single imaging, so that the number of times of imaging is reduced.

[Second modification]

In the embodiment, an example has been described in which the diameter or radius of the circular hole is calculated by using the distance between tangent points. However, the diameter or radius of the circular hole may be determined by pattern matching.

In the second modification, many circle pattern images with slightly different diameters are stored in the pattern storage unit 442 according to the measurement accuracy. The pattern matching unit 492 reads the circle pattern images one by one, and performs pattern matching between the circle pattern image and the edge of the captured image. A pattern image, from which the highest degree of matching is obtained, is determined, and the diameter (or radius) of the circle in the determined pattern image is defined as a diameter (or a radius) of the circular hole. The pattern matching unit 492 defines the center position of the circle in the pattern image showing the highest degree of matching as the center position of the circular hole.

Not only the circle pattern images, but also many pattern images may be prepared in the pattern storage unit 442 according to the shape of a portion to be measured, such that the pattern matching unit 492 may determine a pattern image that shows the highest degree of matching with the edge by means of pattern matching. In this case, the dimension of the shape in the determined pattern image is regarded as a dimension of the shape of the portion to be measured.

[Third modification]

In consideration of the case where burrs generated along a circular hole can possibly be detected as an edge, the edge detection unit 482 may detect the contour by using a Sobel filter or other type of filter, and compare the detected contour with an ideal circular shape so as to locate an irregular area such as burrs. Then, the edge detection unit 482 may identify the edge point, excluding the irregular area.

[Fourth modification]

In the embodiment, an example has been described in which the machining results are measured. In a fourth modification, an example is described in which a positioning error in placing the workpiece W prior to machining is corrected. The position where the workpiece W is placed on the table is referred to as "placement position of the workpiece W". The placement position of the workpiece W can be determined by a predetermined reference point of the workpiece W. This example shows that the predetermined reference point is defined as a machine-processing origin, and based on this machine-processing origin, the placement position of the workpiece W is determined. That is, the deviation between the machine-processing origin of the workpiece W placed in an ideal state and the machine-processing origin of the workpiece W that is actually placed corresponds to "a deviation of placement position of the workpiece W". An example is described below in which the external computer 400 (an example of the information processing device) uses a captured image to measure the deviation of the machine-processing origin.

In relation to FIG. 3, imaging conditions for imaging the machine-processing origin are now described.

As an imaging condition for imaging the machine-processing origin, the machine-processing origin (Xp=0 mm, Yp=0 mm) is defined as an imaging center D. The imaging region is the inside of the rectangle defined by the thin lines around the imaging center D illustrated.

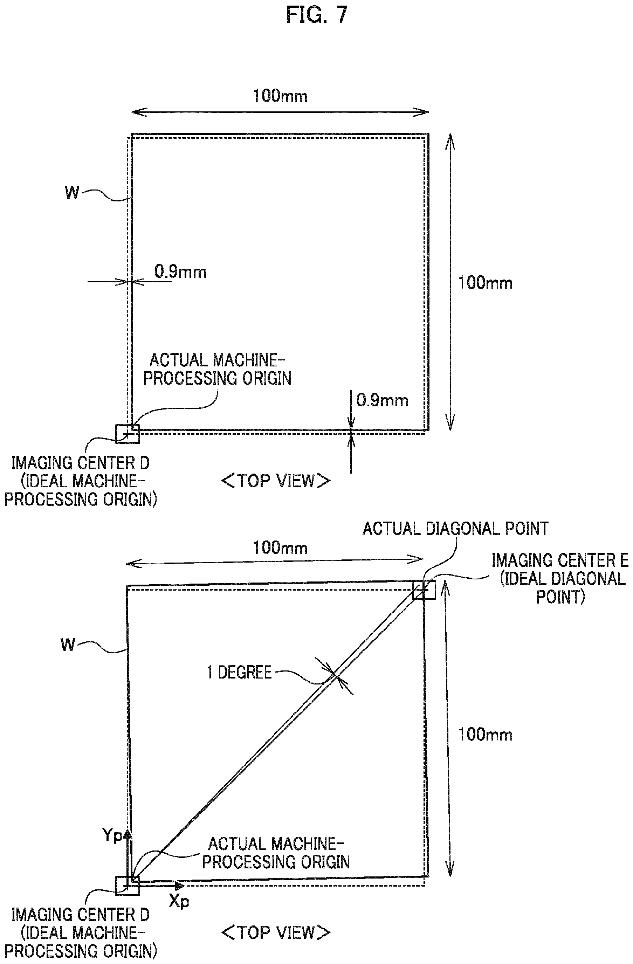

The top diagram of FIG. 7 illustrates the placement state of the workpiece W in the fourth modification.

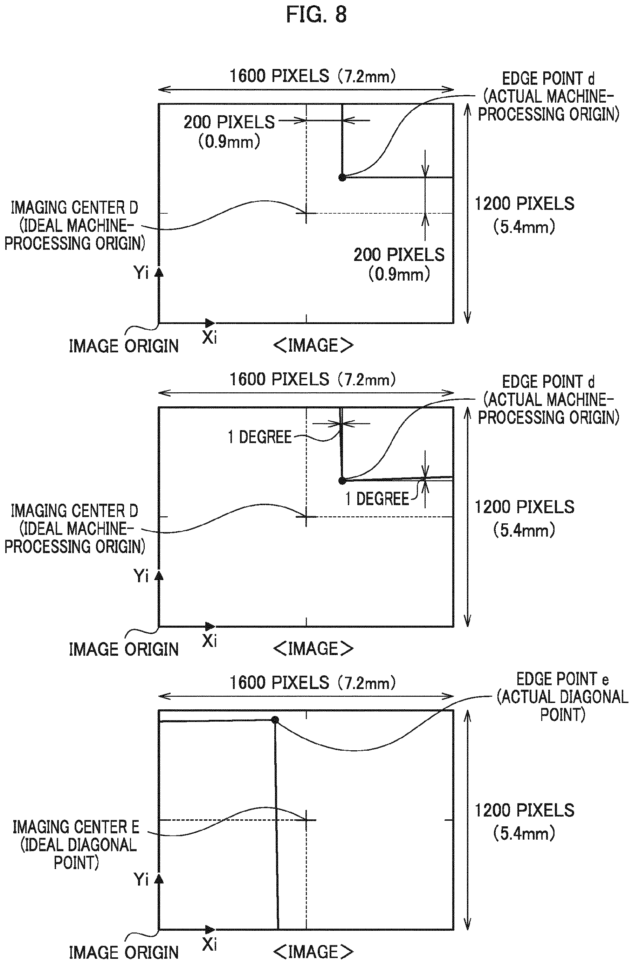

The top diagram of FIG. 7 is a diagram for explaining how the workpiece W is placed as a precondition of the captured image illustrated in the top diagram of FIG. 8, not a diagram illustrating the captured image. It is assumed that the top diagram of FIG. 7 illustrates the workpiece W placed when it is viewed from above.

The broken-line square shows the position and orientation of the workpiece W that meet the specified imaging conditions. That is, it shows the position and orientation of the workpiece W placed in an ideal state. The NC program runs on the assumption that the workpiece W is correctly placed at this position and in this orientation.

In contrast, the solid-line square shows the position and orientation of the workpiece W that is actually placed. Since errors can occur in the placement process, there is a possibility that the position and orientation of the solid-line square may vary each time the workpiece W is changed. The top diagram of FIG. 7 illustrates the placement state of the workpiece W merely as an example.

In this example, the orientation of the workpiece W meets the imaging condition. That is, the workpiece W is correctly oriented. However, the position of the workpiece W is displaced toward the upper right direction. Specifically, the machine-processing origin of the workpiece W placed is supposed to be at the original machine coordinates (Xm=0 mm, Ym=0 mm). However, the actual machine-processing origin is at the machine coordinates (Xm=0.9 mm, Ym=0.9 mm). Hereinafter, the machine-processing origin specified as a condition for placing the workpiece in the machining drawing is referred to as "ideal machine-processing origin", and the machine-processing origin of the workpiece W placed is referred to as "actual machine-processing origin".

If machining is performed as is, the positions of the first hole and the second hole are displaced toward the lower left. The machine tool 800 has a function of correcting the positional deviation of the machine-processing origin in such a case. Specifically, when an offset value (Xoff=0.9 mm, Yoff=0.9 mm) for correcting the positional deviation is set for the machine tool 800, drilling can be performed as shown in the machining drawing. Hereinafter, the external computer 400 (an example of the information processing device) analyzes a captured image and calculates the offset value (Xoff=0.9 mm, Yoff=0.9 mm).

The top diagram of FIG. 8 illustrates the edge (boundary line) detected from the captured image with the imaging center D.

Two broken lines show the position and orientation of the workpiece W that meet the imaging conditions in the same manner as illustrated in the top diagram of FIG. 7. Two solid lines show the edge of the workpiece W placed by a worker in the same manner as illustrated in the top diagram of FIG. 7. The edge detection unit 482 defines the intersection (that is, the corner point) of the two edge lines as image coordinates of the actual machine-processing origin (Xi (actual machine-processing origin), Yi (actual machine-processing origin)) through image analysis. The coordinate conversion unit 488 converts the image coordinates of the actual machine-processing origin defined by the edge detection unit 482 to machine coordinates in accordance with the procedure below. The machine coordinates of the actual machine-processing origin are expressed as (Xm (actual machine-processing origin), Ym (actual machine-processing origin)).

Xm (actual machine-processing origin) is calculated by the following Equation 9.

$$\text{Xm (actual machine-processing origin)} = \text{Xm (imaging center D)}$$
$$+ R \times (\text{Xi (actual machine-processing origin)} - \text{Xi (imaging center D))} \quad \text{... (Equation 9)}$$

Xm (imaging center D) is equal to 100 mm. R represents the resolution (4.5 $\mu$m/pixel). Xi (actual machine-processing origin) is determined as the image coordinates of the intersection of the edge lines through image analysis. Xi (imaging center D) is equal to 800 pixels.

Ym (actual machine-processing origin) is calculated by the following Equation 10.

$$Ym \text{ (actual machine-processing origin)} = Ym \text{ (imaging center D)}$$

$$+ R \times (Yi \text{ (actual machine-processing origin)} - Yi \text{ (imaging}$$

$$\text{center D)}) \quad \ldots \text{ (Equation 10)}$$

Ym (imaging center D) is equal to 100 mm. R represents the resolution (4.5 pm/pixel). Yi (actual machine-processing origin) is determined as the image coordinates of the intersection of the edge lines through image analysis. Yi (imaging center D) is equal to 600 pixels.

In this example, the image coordinates of the actual machine-processing origin (Xi (actual machine-processing origin) = 1000, Yi (actual machine-processing origin) = 800) are converted to machine coordinates of the actual machine-processing origin (Xm (actual machine-processing origin) = 100.9 mm, Ym (actual machine-processing origin) = 100.9 mm).

The correction-value calculation unit 494 calculates an offset value to be transmitted to the machine tool 800 from the machine coordinates of the actual machine-processing origin obtained by the coordinate conversion unit 488. The offset value is a type of parameter (correction value) that is set to correct the motion in the machine tool 800. Specifically, an offset value (Xoff, Yoff) is obtained by subtracting the machine coordinates of the ideal machine-processing origin from the machine coordinates of the actual machine-processing origin. In this example, the offset value is calculated as follows.

$$Xoff = Xm \text{ (actual machine-processing origin)} - Xm \text{ (ideal machine-}$$

$$\text{processing origin)}$$

$$= 100.9 \text{ mm} - 100 \text{ mm}$$

$$= 0.9 \text{ mm}$$

$$Yoff = Ym \text{ (actual machine-processing origin)} - Ym \text{ (ideal machine-}$$

$$\text{processing origin)}$$

$$= 100.9 \text{ mm} - 100 \text{ mm}$$

$$= 0.9 \text{ mm}$$

The offset value intends to associate the machine-processing coordinates (Xp, Yp) (see FIG. 3) of the workpiece W in the machining drawing with the machine coordinates (Xm, Ym) that are used in the machine tool 800 (see FIG. 1). In this example, the machine-processing origin (0, 0) is associated with the machine coordinates (0.9, 0.9). Other machine-processing coordinates (Xp, Yp) are also associated with machine coordinates (Xm=Xp+0.9, Ym=Yp+0.9). When this offset value is set for the machine tool 800, then the machine tool 800 performs machining at machine coordinates corrected by adding 0.9 to both the machine coordinates Xp and Yp instructed by the numerical control device 880. This leads to the machining results as shown in the machining drawing.

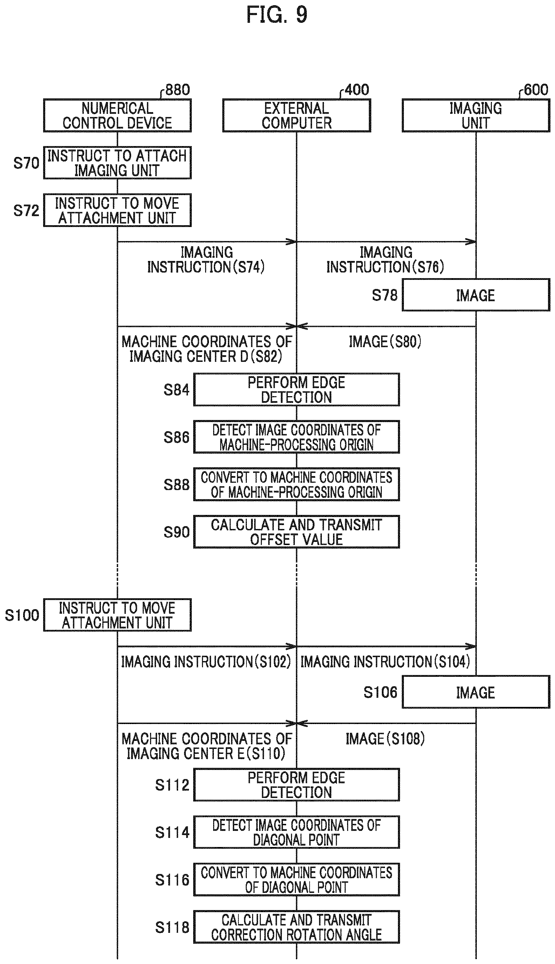

The first half of FIG. 9 illustrates the sequence in the fourth modification.

This sequence is based on the sequence on the left side of FIG. 6. The process in S70 is the same as that in S10 on the left side of FIG. 6. The numerical control device 880 instructs the drive unit 824 to move the attachment unit 822 (the main shaft 100) such that the optical axis of the imaging unit 600 focuses on the machine coordinates of the imaging center D (ideal machine-processing origin) (S72). The drive unit 824 moves the attachment unit 822 (the main shaft 100) in accordance with the instruction. The processes in S74 to S84 are the same as those in S14 to S24 illustrated on the left side of FIG. 6.

The edge detection unit 482 detects the image coordinates of the actual machine-processing origin through image analysis (S86). The coordinate conversion unit 488 converts the image coordinates of the actual machine-processing origin detected to machine coordinates (S88). The correction-value calculation unit 494 calculates an offset value to be set for the machine tool 800 from the machine coordinates of the actual machine-processing origin obtained by the coordinate conversion unit 488. Then, the correction-value transmission unit 468 transmits the offset value (a type of correction value) to the machine tool 800 (S90). Thereafter, the machine tool 800 performs appropriate machining positioning according to the offset value.

Although not illustrated, the sequence in the fourth modification may be based on the sequence on the right side of FIG. 6. In that case, the processes in S40 to S54 on the right side of FIG. 6 are performed in the same manner as in the embodiment, and thereafter, the processes in S86 to S90 illustrated in the first half of FIG. 9 are performed.

[Fifth modification]

In the fifth modification, in addition to the deviation of the machine-processing origin, a deviation of the orientation of the workpiece W is also measured. The orientation in which the workpiece W is placed on the table is referred to as "placement orientation of the workpiece W". The placement orientation of the workpiece W can be determined by an angle of the line segment connecting the ends at two predetermined reference points of the workpiece W. That is, the angle formed by the line segment connecting the ends at two predetermined reference points of the workpiece placed in an ideal state, and the line segment connecting the ends at two predetermined reference points of the workpiece W that is actually placed corresponds to "a deviation of placement orientation of the workpiece W". In this example, the machine-processing origin and the point diagonal to the machine-processing origin are defined as two predetermined reference points. Hereinafter, the point diagonal to the machine-processing origin may sometimes be simply referred to as "diagonal point". The machine-processing origin is an example of "first reference point". The point diagonal to the machine-processing origin is an example of "second reference point". The machine coordinates of the machine-processing origin are an example of "first coordinates". The machine coordinates of the point diagonal to the machine-processing origin are an example of "second coordinates".

In relation to FIG. 3, imaging conditions for imaging the machine-processing origin and the point diagonal to the machine-processing origin are now described. In imaging the diagonal point, the machine coordinates of the diagonal point (Xp=200 mm, Yp=200 mm) on the conditions for placing specified in the machining drawing are defined as an imaging center E. The imaging region is the inside of the rectangle defined by the thin lines around the imaging center E illustrated. Hereinafter, the diagonal point on the conditions for placing specified in the machining drawing is referred to as "ideal diagonal point", and the diagonal point of the workpiece W placed is referred to as "actual diagonal point".

The bottom diagram of FIG. 7 illustrates the placement state of the workpiece W in the fifth modification.

Similarly to the top diagram of FIG. 7, it is assumed that the bottom diagram of FIG. 7 illustrates the workpiece W placed when it is viewed from above. The broken-line square shows the ideal position and orientation of the workpiece W that meet the imaging conditions in the same manner as illustrated in the top diagram of FIG. 7. The solid-line square shows the actual position and orientation of the workpiece W placed by a worker in the same manner as illustrated in the top diagram of FIG. 7. The orientation of the workpiece W is deviated by +1 degree counterclockwise. The position of the workpiece W is displaced toward the upper right direction. Specifically, the machine-processing origin of the workpiece W placed is supposed to be at the original machine coordinates (Xm=100 mm, Ym=100 mm). However, the actual machine-processing origin is at the machine coordinates (Xm=100.9 mm, Ym=100.9 mm). If machining is performed as is, the positions of the first hole and the second hole are displaced.

The machine tool 800 has a function of correcting the positional deviation of the machine-processing origin and the deviation of orientation of the workpiece W. That is, when an offset value (Xoff=0.9 mm, Yoff=0.9 mm) and a correction rotation angle (+1) for correcting the positional deviation are set for the machine tool 800, drilling is performed as shown in the machining drawing. Hereinafter, the external computer 400 (an example of the information processing device) calculates the offset value (Xoff=0.9 mm, Yoff=0.9 mm) and the correction rotation angle (+1) based on the captured image of the machine-processing origin and the captured image of the diagonal point.

The middle diagram of FIG. 8 illustrates the edge (boundary line) detected from the captured image with the imaging center D defined as an ideal machine-processing origin.

Two broken lines show the ideal position and orientation of the workpiece W that meet the imaging conditions in the same manner as illustrated in the top diagram of FIG. 8. Two solid lines show the edge of the actual workpiece W placed by a worker in the same manner as illustrated in the top diagram of FIG. 8. The same applies to the bottom diagram of FIG. 8 that is described later. The two edge lines are both angled by one degree counterclockwise. The edge detection unit 482 defines the intersection (that is, the corner point) of the two edge lines as image coordinates of the actual machine-processing origin (Xi (actual machine-processing origin), Yi (actual machine-processing origin)) through image analysis. Then, the coordinate conversion unit 488 converts the image coordinates of the actual machine-processing origin to machine coordinates. The machine coordinates of the actual machine-processing origin are expressed as (Xm (actual machine-processing origin)), Ym (actual machine-processing origin)). The conversion procedure is the same as that in the upper diagram of FIG. 8, and thus descriptions thereof are omitted.

The bottom diagram of FIG. 8 illustrates the edge (boundary line) detected from the captured image with the imaging center E defined as an ideal diagonal point.

As illustrated in the bottom diagram of FIG. 8, the actual diagonal point deviates from the ideal diagonal point toward the upper left side. The edge detection unit 482 defines the intersection (that is, the corner point) of the two edge lines as image coordinates of the actual diagonal point (Xi (actual diagonal point), Yi (actual diagonal point)) through image analysis. The coordinate conversion unit 488 converts the image coordinates of the actual machine-processing origin to machine coordinates in accordance with the procedure below. The machine coordinates of the actual diagonal point are expressed as (Xm (actual diagonal point), Ym (actual diagonal point)).

Xm (actual diagonal point) is calculated by the following Equation 11.

```
Xm (actual diagonal point) = Xm (imaging center E) + R×(Xi
(actual diagonal point) - Xi (imaging center E))     ...
(Equation 11)
```

Xm (imaging center E) is equal to 200 mm. R represents the resolution (4.5 $\mu$m/pixel). Xi (actual diagonal point) is determined as the image coordinates of the intersection of the edge lines through image analysis. Xi (imaging center E) is equal to 800 pixels.

Ym (actual diagonal point) is calculated by the following Equation 12.

```
Ym (actual diagonal point) = Ym (imaging center E) + R×(Yi
(actual diagonal point) - Yi (imaging center E))     ...
(Equation 12)
```

Ym (imaging center E) is equal to 200 mm. R represents the resolution (4.5 pm/pixel). Yi (actual diagonal point) is determined as the image coordinates of the intersection of the edge lines through image analysis. Yi (imaging center E) is equal to 600 pixels.

In this example, the image coordinates of the actual diagonal point (Xi (actual diagonal point) = 608.67, Yi (diagonal point) = 1184.44 are converted to machine coordinates of the actual diagonal point (Xm (actual diagonal point) = 99.14 mm, Ym (actual diagonal point) = 102.63 mm).

Subsequently, the correction-value calculation unit 494 calculates an offset value and a correction rotation angle. The offset value is calculated by the same method as that in the fourth modification. A method for calculating the correction rotation angle is now described. As illustrated in the bottom diagram of FIG. 7, focus is on the angle of the line segment connecting the actual machine-processing origin and the actual diagonal point. When a workpiece is placed correctly, this line segment forms an angle of 45 degrees with respect to the Xp-axis. When the correction rotation angle is represented as θ, this line segment forms an angle of (45+θ) degrees with respect to the Xp-axis when the workpiece is actually placed. Therefore, the following Equation 13 holds.

```
tan(45+θ) = (Ym (actual diagonal point) - Ym (actual machine-
processing origin))/(Xm (actual diagonal point) - Xm (actual
machine-processing origin))   ... (Equation 13)
```

Then, Equation 14 is derived from Equation 13. The correction-value calculation unit 494 calculates the correction rotation angle θ by using Equation 14.

```
θ = arctan((Ym (actual diagonal point) - Ym (actual machine-
processing origin))/(Xm (actual diagonal point) - Xm (actual
machine-processing origin))) - 45  ... (Equation 14)
```

The calculation result of Equation 14 in this example is shown below.

$$\theta=\arctan((102.630-0.9)/(99.139-0.9))-45$$

$$=\arctan(1.0355)-45$$

$$=46-45=1$$

Next, the sequence in the fifth modification is described.

The second half of FIG. 9 illustrates the sequence in the fifth modification.

This sequence is continued from the sequence illustrated in the first half of FIG. 9. The numerical control device 880 instructs the drive unit 824 to move the attachment unit 822 (the main shaft 100) such that the optical axis of the imaging unit 600 focuses on the machine coordinates of the imaging center E (ideal diagonal point) (S100). The drive unit 824 moves the attachment unit 822 (the main shaft 100) in accordance with the instruction. The processes in S102 to S112 are the same as those in S14 to S24 illustrated on the left side of FIG. 6.

The edge detection unit 482 detects the image coordinates of the actual diagonal point through image analysis (S114). The coordinate conversion unit 488 converts the image coordinates of the actual diagonal point detected to machine coordinates (S116). The correction-value calculation unit 494 calculates the correction rotation angle from the machine coordinates of the actual machine-processing origin and the machine coordinates of the actual diagonal point. Then, the correction-value transmission unit 468 transmits the correction rotation angle (a type of correction value) to the machine tool 800 (S118). Thereafter, the machine tool 800 performs appropriate machining positioning according to the offset value and the correction rotation angle.

The dimension calculation unit 490 may calculate the distance between the actual machine-processing origin and the actual diagonal point. When the calculated distance does not correspond with the distance in the machining drawing, the output unit 430 in the external computer 400 or the operation panel 890 may issue an alert indicating that the workpiece W is inappropriate.

In the fifth modification, two reference points may be used other than the machine-processing origin and the point diagonal to the machine-processing origin. For example, the lower right corner point may be used as the first reference point, while the upper left corner point may be used as the second reference point.

[Sixth modification]

The external computer 400 (an example of the information processing device) may measure the deviation of orientation of the workpiece W by only using a captured image with the machine-processing origin at the center. In the sixth modification, the slope of the edge line detected from the captured image is obtained.

The edge detection unit 482 obtains a correction rotation angle through image analysis. The correction rotation angle is formed by a boundary line (a thick solid line extending substantially in the horizontal direction in the middle diagram of FIG. 8) with respect to the Xi-axis. The boundary line shows the edge on the front side of the workpiece W. The edge detection unit 482 also obtains an angle through image analysis. The angle is formed by a boundary line (a thick solid line extending substantially in the vertical direction in the middle diagram of FIG. 8) with respect to the Y-axis. The boundary line shows the edge on the left side of the workpiece W. This example shows that the correction rotation angle $\theta$ calculated by either method is 1 degree counterclockwise. In principle, the correction rotation angles $\theta$ calculated by the two methods are consistent with each other. However, the average value of both the correction rotation angles $\theta$ may be used in consideration of an error. When the two correction rotation angles $\theta$ exceed the allowable range for the error, the computation unit 486 may determine that the workpiece W is inappropriate, and the output unit 430 in the external computer 400 or the operation panel 890 may issue an alert.

[Seventh modification]

When the external computer 400 (an example of the information processing device) detects a deviation of the machine-processing origin of the workpiece W or a deviation of the orientation of the workpiece W through the operation shown in the fourth to sixth modifications, then the output unit 430 in the external computer 400 or the operation panel 890 may issue an alert indicating that there is a deviation of the machine-processing origin of the workpiece W or a deviation of the orientation of the workpiece W. This alert informs the worker of the deviation of the position or orientation of the workpiece W, so that the worker can correctly place the workpiece W back. Therefore, a machining defect due to inappropriate placement of the workpiece W can be prevented.

[Eighth modification]

The embodiment and the above modifications have illustrated an example in which a circular hole is measured. The circular hole (a cylindrical recessed portion) is an example of the measurement target portion, that is, a portion of the workpiece W to be measured. The measurement target portion may have any other shape with a circle when viewed from the Z-axis direction, such as a conical recessed portion, a cylindrical portion (a cylindrical protruding portion), or a conical protruding portion. The measurement target portion may have a shape with lines extending in parallel when viewed from the Z-axis direction, such as a groove or a wall. The width of the shape with lines extending in parallel may be measured. The measurement target portion may have any other shape such as an elongated circle, an ellipse, or a polygon (for example, a rectangle or hexagon) when viewed from the Z-axis direction. Any other dimension such as the center, diameter, side length, diagonal-line length, and angle of the corner (the angle formed by two sides of the edge) may be measured. The measurement target portion may be a protruding portion, a recessed portion, or a sloped portion. The shape of the measurement target portion may be measured either before or after machining.

[Ninth modification]

There is a case where the dimension calculation unit 490 determines that the dimension calculated based on the edge is different from a predetermined dimension of the workpiece W, referring to the data on the machining drawing stored in the data storage unit 440. In that case, the output unit 430 in the external computer 400 or the operation panel 890 may output an alert indicating that the workpiece W placed does not have a predetermined size or a predetermined shape. For example, an alert is output when the length of the side of the workpiece W calculated based on the edge does not correspond with the length of the side of the workpiece W included in the data on the machining drawing. For another example, an alert is output when the angle of the corner of the workpiece W calculated based on the edge does not correspond with the angle of the corner of the workpiece W included in the data on the machining drawing. That is, when the dimension calculation unit 490 determines that the workpiece W placed does not have a predetermined size or a predetermined shape based on the calculated dimension of the workpiece W, the output unit 430 in the external computer 400 or the operation panel 890 outputs an alert.

[Tenth modification]

In the first example of the sequence (on the left side of FIG. 6), the numerical control device 880 reads the machine coordinates of the imaging center from the NC program (machining program) in S12, and moves the attachment unit 822 (the main shaft 100) to the position of the machine coordinates read. Therefore, the NC program has the machine coordinates of the imaging center (the position to which the attachment unit 822 moves) described therein.

In a tenth modification, the external computer 400 (an example of the information processing device) transmits the machine coordinates of the imaging center to the numerical control device 880. In the present modification, the external computer 400 operates while reading a simple program created by a user (hereinafter, referred to as "measurement program") in the computation unit 486. This measurement program is stored in the data storage unit 440. The user describes the machine coordinates of the imaging center into the measurement program. The external computer 400 reads the machine coordinates of the imaging center from the measurement program, and instructs the numerical control device 880 to move the attachment unit 822 to the position of the machine coordinates read.

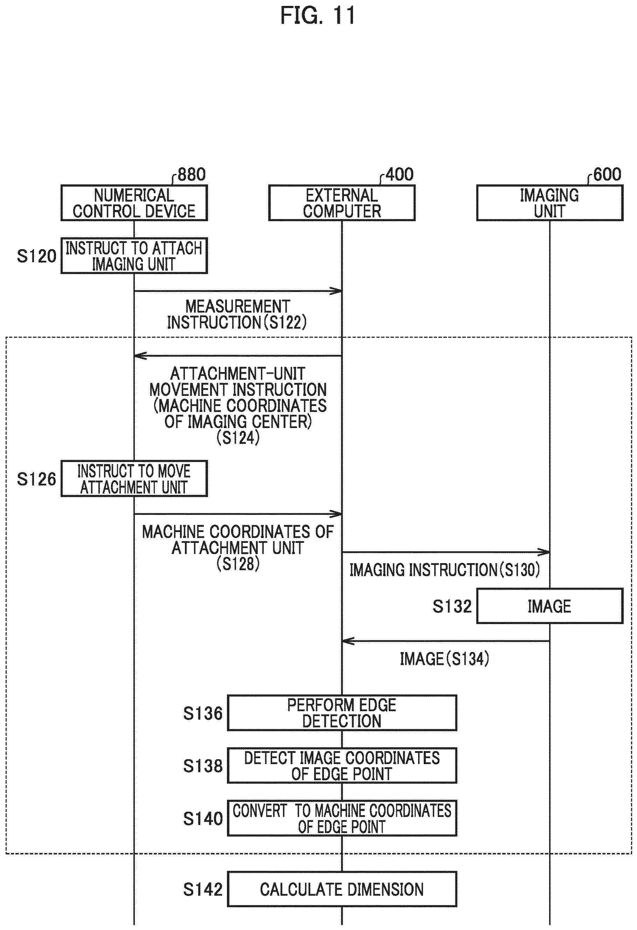

FIG. 11 is a diagram illustrating a sequence in the tenth modification.

The numerical control device 880 instructs the PLC 860 to attach the imaging unit 600 in the same manner as in S10 in FIG. 6 (S120). When the numerical control device 880 reads a measurement instruction for a predetermined area (for example, the first hole) from the NC program, then the numerical control device 880 transmits the measurement instruction to the external computer 400 (S122). In accordance with the measurement instruction, the external computer 400 reads the machine coordinates of the imaging center for measuring the predetermined area from the measurement program, and transmits an attachment unit movement instruction including the machine coordinates of the imaging center to the numerical control device 880 (S124).

The numerical control device 880 instructs the drive unit 824 to move the attachment unit 822 in accordance with the received attachment unit movement instruction (S126). The drive unit 824 moves the attachment unit 822 such that the optical axis of the imaging unit 600 focuses on the machine coordinates of the imaging center.

The external computer 400 receives the machine coordinates of the attachment unit 822 from the numerical control device 880 as needed (S128). When the received machine coordinates of the attachment unit 822 corresponds with the machine coordinates of the imaging center, the external computer 400 determines that movement of the attachment unit 822 has completed, and transmits an imaging instruction to the imaging unit 600 (S130). The subsequent processes in S132 to S142 are the same as those in S18, S20, and S24 to S30 in FIG. 6. When the dimension calculation (S142) ends, the external computer 400 transmits a completion notification to the numerical control device 880. When receiving the completion notification, the numerical control device 880 resumes machining in accordance with the NC program.

In the on-screen measurement, as an image is captured only once, the sequence of processes within the broken line in FIG. 11 is accordingly performed once. In this case, the edge detection unit 482 detects three or more edge points from a single captured image. In contrast, in the offscreen measurement, as an image is captured twice or more, the sequence of processes within the broken line in FIG. 11 is accordingly performed twice or more. In this case, the edge detection unit 482 detects three or more edge points in two or more captured images.

Focusing on the points in common between the above embodiment (FIG. 6) and the present modification (the tenth modification: FIG. 11), the process flow of on-screen measurement is summarized below.

The imaging unit 600 captures an image of the area to be measured once (S18 and S50 in FIG. 6, S132 in FIG. 11) . For example, in a case where the first hole is measured, the circular hole in its entirety falls within a single captured image (FIG. 4). The edge detection unit 482 performs a process of detecting the edge including three or more positions on the circumference of the hole (S24 and S54 in FIG. 6, S136 in FIG. 11), and calculates the positions (image coordinates) of the three or more edge points (S26 and S56 in FIG. 6, S138 in FIG. 11). It is desirable that the edge detection unit 482 detects three edge points at a pitch of 120 degrees. It is also desirable that the edge detection unit 482 detects four or more edge points at an equal pitch.

The dimension calculation unit 490 calculates an approximate circle from the detected edge points by means of the least squares method (S30 and S60 in FIG. 6, S142 in FIG. 11). The center and diameter of the circle can be obtained from the calculated approximate circle. The dimension calculation unit 490 may calculate the diameter of the circle from any two edge points that intersect a straight line passing through the center of the circle on its circumference. For example, when 18 edge points are detected, the dimension calculation unit 490 applies the least squares method to the 18 edge points. At this time, the dimension calculation unit 490 may obtain a deviation of each edge point from the approximate circle, exclude the edge point whose deviation exceeds a specified value from the targets to which the least squares method is applied, and recalculate the approximate circle. As described above, the dimension calculation unit 490 may calculate the diameter based on the machine coordinates of the edge points, or may calculate the diameter based on the image coordinates of the edge points. When using the image coordinates, the dimension calculation unit 490 calculates the number of pixels corresponding to the diameter based on the image coordinates of the edge points, and multiplies the number of pixels by the resolution R to calculate the diameter.

Next, the process flow of offscreen measurement is also summarized. The imaging unit 600 captures images of the area to be measured in multiple times. Here, FIG. 1 shows an example of imaging twice.

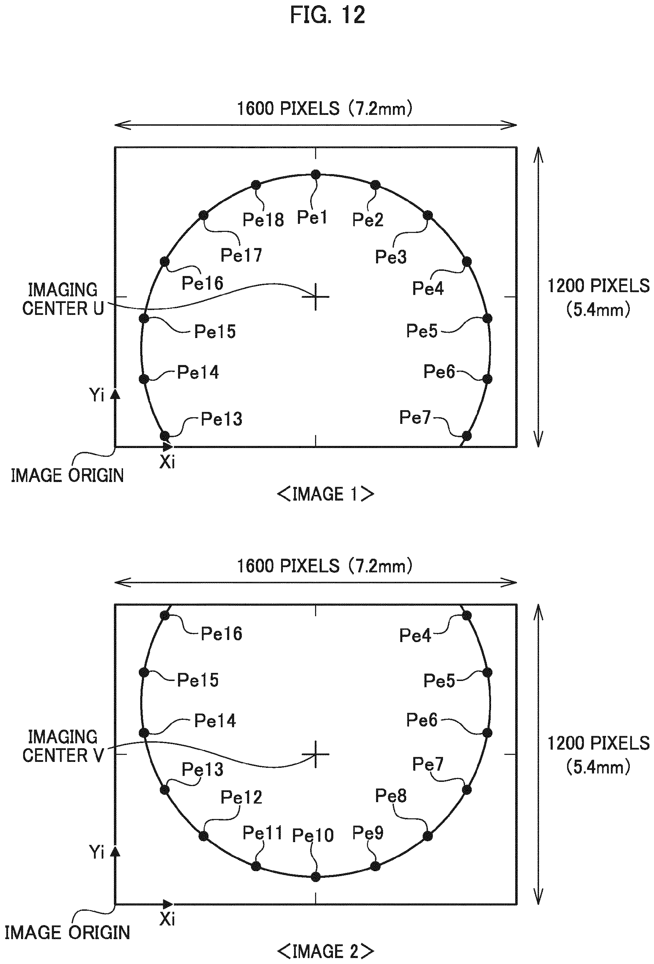

The top diagram of FIG. 12 shows a captured image 1 of a circular hole to be measured by offscreen measurement. The bottom diagram of FIG. 12 shows a captured image 2 of the circular hole to be measured by offscreen measurement. In the captured image 1, the lower portion of the circular hole is missing, while in the captured image 2, the upper portion of the circular hole is missing.

The edge detection unit 482 detects edge points at a pitch of 20 degrees on the arc in each of the captured image 1 and the captured image 2 (S24 and S54 in FIG. 6, S136 in FIG. 11), and calculates the edge positions (image coordinates of the edge points) (S26 and S56 in FIG. 6, S138 in FIG. 11). In the offscreen measurement, since the image capturing region of the workpiece W differs between the captured images, the positional relationship between the edge points cannot be correctly recognized with image coordinates. For this reason, the diameter is calculated by converting the edge positions to the coordinates in the machine coordinate system (machine coordinates) that is the common standard.

The coordinate conversion unit 488 converts the edge positions from the form of image coordinates to the form of machine coordinates (S28 and S58 in FIG. 6, S140 in FIG. 11). In the example in FIG. 12, since the imaging region of the captured image 1 partially overlaps the imaging region of the captured image 2, the edge points (Pe4 to Pe7 and Pe13 to Pe16) showing the same machine coordinates are detected in both the captured image 1 and the captured image 2. In such a case, the overlapping edge points at the same machine coordinates are unified.

The edge detection unit 482 calculates an approximate circle from the edge points (machine coordinates) by means of the least squares method (S30 and S60 in FIG. 6, S142 in FIG. 11). The center and diameter of the circle are calculated in the same manner as the on-screen measurement. For example, when 18 edge points are detected, the edge detection unit 482 applies the least squares method to the 18 edge points. At this time, the edge detection unit 482 may obtain a deviation of each edge point from the approximate circle, exclude the edge point whose deviation exceeds a specified value from the targets to which the least squares method is applied, and recalculate the approximate circle (diameter). Even in the offscreen measurement, it is still desirable that the edge detection unit 482 detects the edge points at an equal pitch. Detection of the edge points at an equal pitch can reduce a measurement error.

Next, an editing tool used for generating a measurement program is described.

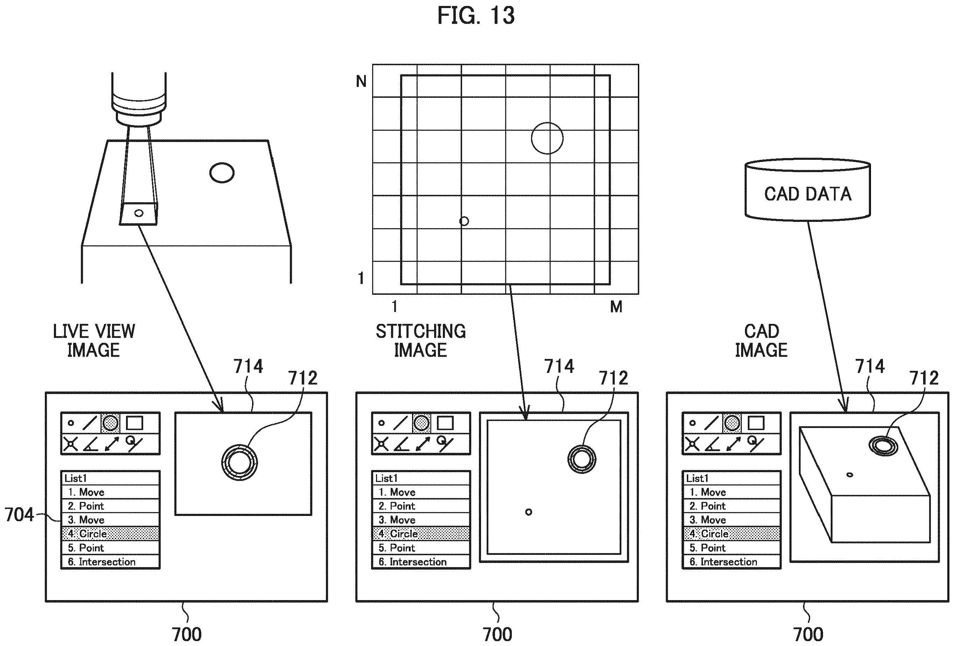

FIG. 13 is a diagram illustrating an editing screen of the measurement program.

The editing tool runs on the external computer 400. FIG. 13 illustrates the user interface for particularly setting the machine coordinates of the imaging center. The editing tool displays an editing screen 700 on the display unit of the external computer 400. The editing screen 700 includes a positioning image 714. The positioning image 714 shows the overall or partial shape of the workpiece W. The user can move the imaging unit 600 by operating a jog attached to the external computer 400 to slide the live view image.

The positioning image 714 is, for example, a live view image (on the upper left of the diagram). The live view image is an image currently being captured by the imaging unit 600 attached to the attachment unit 822. The user can slide the live view image by operating a jog attached to the external computer 400 and thereby moving the imaging unit 600.

The positioning image 714 may be the whole or a portion of a stitching image. The stitching image is an image including the workpiece W in its entirety, and is made by connecting N×M captured images together, that are obtained from the imaging unit 600.

The positioning image 714 may be the whole or a portion of a CAD (Computer Aided Design) image. The CAD image is a graphic image generated from CAD data of a workpiece.

In a list 704, commands included in the measurement program are displayed. For example, with the fourth item "Circle" selected, the editing tool accepts parameters related to circle measurement. The machine coordinates corresponding to the center of an annular pattern 712 set in the positioning image 714 are written into the measurement program as the imaging center. The outer diameter and inner diameter of the annular pattern 712 are also written into the measurement program as parameters for determining the target region for edge detection. The editing tool may allow for setting of the machine coordinate in the Zm direction (height direction).

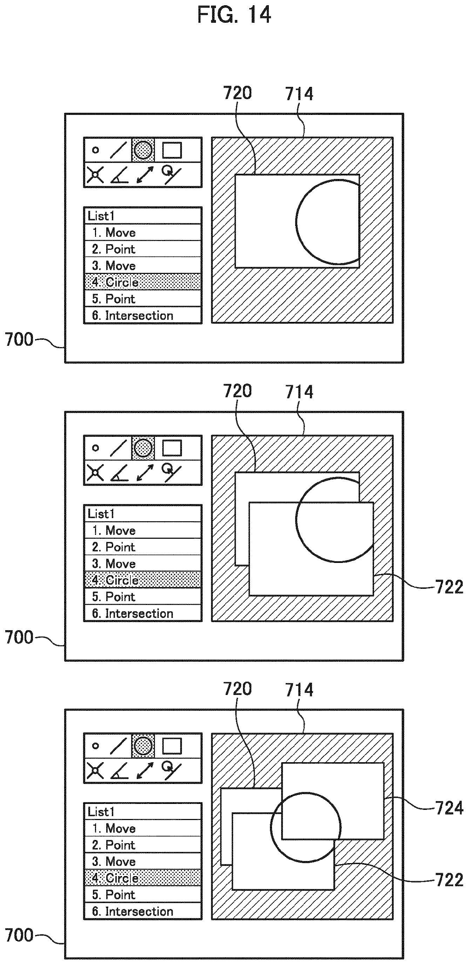

FIG. 14 is a diagram illustrating the first display example of a stitching image on the editing screen 700 of the measurement program.

The editing tool may generate a stitching image by connecting live view images captured plural times together, and may display the stitching image as the positioning image 714 on the editing screen 700.

The top diagram of FIG. 14 illustrates the editing screen 700 after the first imaging.

The display processing unit 432 displays a live view image captured by the first imaging in the region of the positioning image 714. A first live view image 720 is displayed at a predetermined display magnification. Thereafter, the user operates the jog to move the imaging unit 600 for the second imaging. Then, the operation reception unit 422 receives an imaging instruction and the imaging unit 600 performs the second imaging.

The middle diagram of FIG. 14 illustrates the editing screen 700 after the second imaging.

The display processing unit 432 generates a stitching image by connecting a second live view image 722 with the first live view image 720, and displays the stitching image in the region of the positioning image 714. As illustrated in the middle diagram, in a case where an additional live view image 722 fits within the region of the positioning image 714 at the current display magnification, the display processing unit 432 does not change this display magnification. Further, the user moves the imaging unit 600 to perform the third imaging.

The bottom diagram of FIG. 14 illustrates the editing screen 700 after the third imaging.

The display processing unit 432 generates a stitching image by connecting a third live view image 724 with the first live view image 720 and the second live view image 722, and displays the stitching image in the region of the positioning image 714. When an additional live view image is displayed at the current display magnification in the state illustrated in the middle diagram of FIG. 14, a portion of the stitching image may extend over the region of the positioning image 714. In such a case where a stitching image in its entirety in which a plurality of live view images are combined does not fit within the region of the positioning image 714, the display processing unit 432 reduces the display magnification such that the stitching image in its entirety can fit within the region of the positioning image 714. That is, the display processing unit 432 generates a stitching image in which a plurality of live view images captured by the imaging unit 600 are combined, changes the display magnification such that the stitching image in its entirety can fit within the region of the positioning image 714, and displays the stitching image in its entirety on the display unit.

In the bottom diagram of FIG. 14, an example is illustrated in which the first live view image 720, the second live view image 722, and the third live view image 724 partially overlap one another. However, the display processing unit 432 may display a plurality of live view images placed adjacent to each other. The display processing unit 432 may also display a plurality of live view images placed apart from each other.

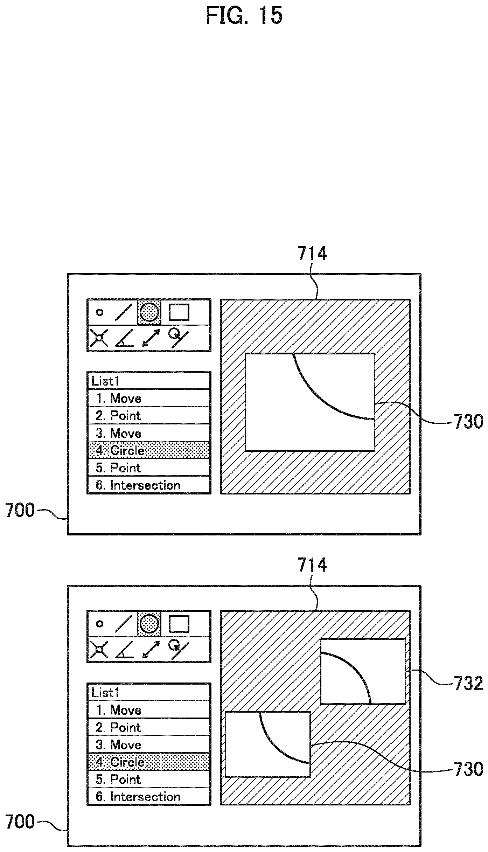

FIG. 15 is a diagram illustrating the second display example of a stitching image on the editing screen 700 of the measurement program. This example shows that a plurality of live view images are displayed apart from each other.

The top diagram of FIG. 15 illustrates the editing screen 700 after the first imaging. A first live view image 730 shows the lower left portion of a hole to be measured. The bottom diagram of FIG. 15 illustrates the editing screen 700 after the second imaging. A second live view image 732 shows the upper right portion of the hole to be measured. In this example, images between the first live view image 730 and the second live view image 732 are missing. In such a case where a plurality of live view images do not overlap or where a plurality of live view images are not adjacent to each other, the display processing unit 432 sometimes displays the live view images placed apart from each other.

The display processing unit 432 may change the display magnification such that a hole to be measured, included in a stitching image, can fit entirely within the region of the positioning image 714, and may display the whole or a portion of the stitching image on the display unit. In this case, it is allowable that the remaining portion of the live view image, other than the hole to be measured, does not fit within the region of the positioning image 714. For example, an image of the outside of the hole to be measured may extend over the region of the positioning image 714.

The display processing unit 432 acquires the first live view image 730 associated with first machine coordinates (for example, machine coordinates of the imaging center) by the first imaging. Based on the first machine coordinates, the display processing unit 432 displays the first live view image 730 such that the shape (contour line) of the hole to be measured, included in the first live view image 730, fits entirely within the region of the positioning image 714.

Next, the second imaging is performed. The display processing unit 432 acquires the second live view image 732 associated with second machine coordinates (same as above). Based on the first machine coordinates and the second machine coordinates, the display processing unit 432 displays a stitching image such that the shape of the hole to be measured, included in the first live view image 730 and in the second live view image 732, fits entirely within the region of the positioning image 714. The display processing unit 432 performs the same processing after the third imaging.

The shape of a hole to be measured is determined by, for example, machine coordinates of an edge line obtained by edge detection in a live view image. The display processing unit 432 may acquire information on the shape of the hole to be measured in advance. When the display processing unit 432 holds machine coordinates that determine the shape of the hole to be measured, it is permissible that the edge detection processing is not performed. The same applies to measurement targets other than a circular hole.

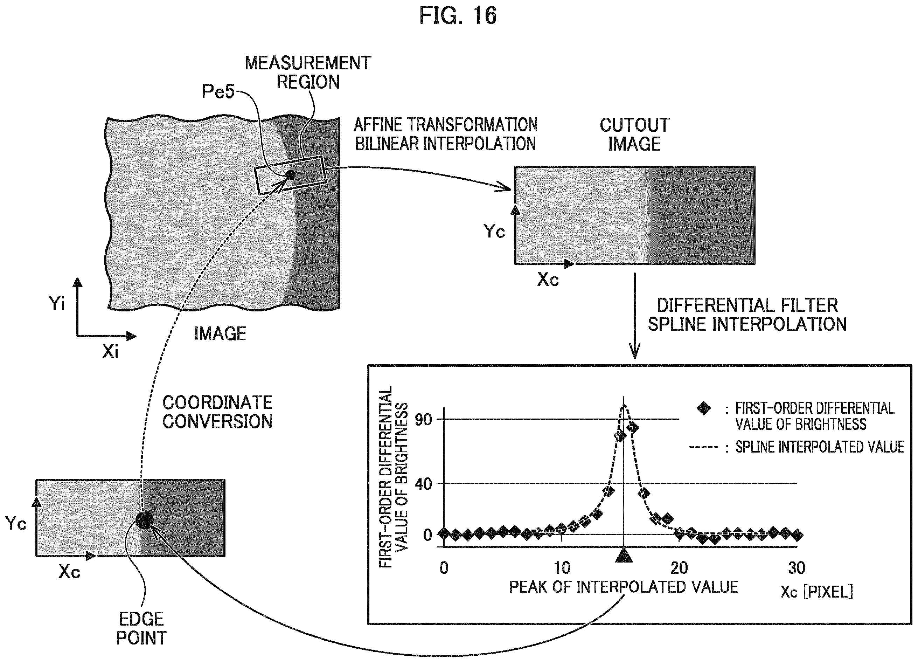

A supplemental explanation of the edge detection performed by the edge detection unit 482 (S24 and S54 in FIG. 6, S136 in FIG. 11) is given below. FIG. 16 is a diagram illustrating an outline of the edge detection.

The captured image illustrated in FIG. 16 is a portion of the captured image illustrated in the top diagram of FIG. 12. The edge detection unit 482 sets a measurement region in the captured image. The measurement region corresponds to a portion of the target region for the edge detection set for the annular pattern 712 illustrated in FIG. 13. This measurement region includes an edge point that needs to be detected. FIG. 16 illustrates the measurement region including the edge point (Pe5) described in relation to FIG. 12. The measurement region is a rectangle of a predetermined size with its longitudinal direction oriented toward the center of the circular hole. The longitudinal direction of the measurement region including the edge point (Pe5) is angled counterclockwise by 10 degrees with respect to the Xi-axis.

The edge detection unit 482 generates a cutout image by rotating the image within the measurement range by using affine transformation and bilinear interpolation. The affine transformation is a type of coordinate conversion method. In this example, the image is rotated clockwise by 10 degrees. The bilinear interpolation is a type of pixelvalue conversion method. In this example, the origin of the cutout image is defined as the lower left corner point, the rightward direction is defined as the positive direction of the Xc-axis, and the upward direction is defined as the positive direction of the Yc-axis. In this process, based on the position and pixel value of each pixel included in the measurement region, the pixel value of each pixel of the cutout image is calculated. Image degradation due to the rotation can be reduced by using the affine transformation and bilinear interpolation.

Focus is on the variations in brightness in the Xc-axis direction in order to locate the edge point. The edge detection unit 482 calculates a first-order differential value of the brightness (hereinafter, sometimes simply referred to as "first-order differential value"). The graph in FIG. 16 shows the first-order differential value of the brightness. In a simple method, the pixel Xc: 16 at which the first-order differential value is maximized is determined to be an edge point. However, when the first-order differential values relative to the respective pixels Xc are directly compared with each other in this manner, the measurement accuracy is low.

The measurement accuracy can be improved by interpolating the first-order differential values. The edge detection unit 482 calculates a spline interpolated value of the first-order differential values. The spline interpolated value is shown by the curve in the graph. The edge detection unit 482 defines the pixel Xc corresponding to a maximum value of the spline interpolated values as an edge point. As described above, the peak of the interpolated value corresponds to the position of the edge point in the cutout image. The pixel Xc corresponding to a negative minimum value of the spline interpolated values may sometimes be defined as an edge point. When the spline interpolated value is used in the manner as described above, a resolution of 0.02 pixel is achieved. This makes it possible to perform the measurement with high accuracy. The spline interpolation described in this example is a type of subpixel processing.

The edge detection unit 482 converts the coordinates (Xc, Yc) of the edge point in the cutout image to the image coordinates (Xi, Yi) of the edge point in the captured image. At this time, the coordinate conversion is performed by rotating the image reversely to the rotation using the affine transformation described above.

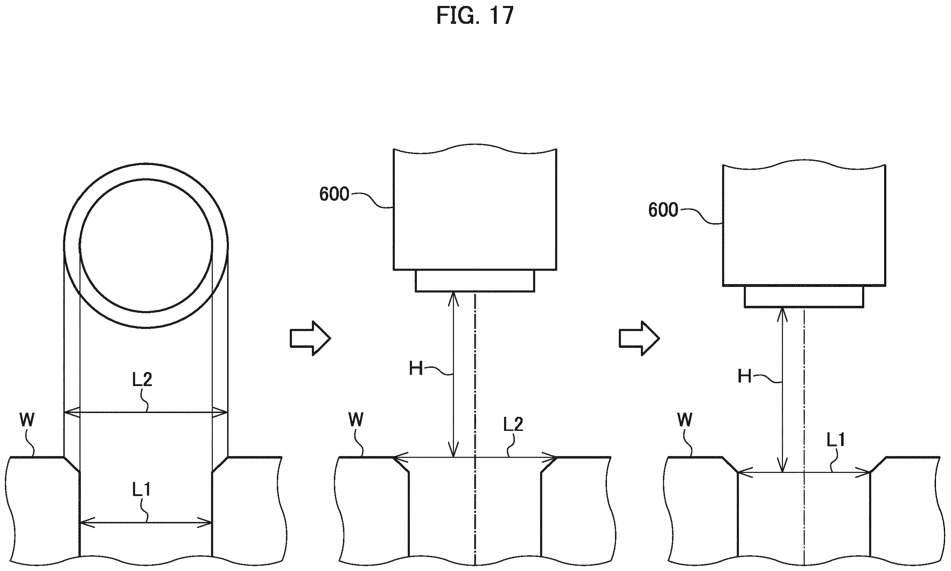

FIG. 17 is a diagram illustrating an outline of the chamfering amount measurement. FIG. 17 illustrates, on its left side, a top view and a side cross-sectional view of a circular hole. A circular hole is formed on the workpiece W. The circular hole has a diameter L1. The edge portion of the circular hole is chamfered. The chamfered cut surface (hereinafter, referred to as "chamfered part") is sloped downward toward the inner side, and has an inner diameter L1. The chamfered part has an outer diameter L2.

FIG. 17 illustrates, in its middle section, the position of the imaging unit 600 when the outer diameter L2 of the chamfered part is measured. When the distance from the end face of the imaging unit 600 to the top surface of the workpiece W becomes a predetermined value H, the imaging unit 600 focus on the top surface. The imaging unit 600 is held in this state in a case of measuring the outer diameter L2. Then, the outer diameter L2 is measured by using the image captured at this time.

FIG. 17 illustrates, on its right side, the position of the imaging unit 600 when the inner diameter L1 of the chamfered part is measured. When the inner diameter L1 is measured, the imaging unit 600 is held in such a manner that the horizontal plane including the inner diameter of the chamfered part is distanced from the end face of the imaging unit 600 by the distance H. In this state, an image is captured by the imaging unit 600. The inner diameter L1 is measured by using this captured image.

A supplemental explanation of the method for calculating the distance between edge points is given below.

In the above embodiment, the distance between edge points is calculated based on the difference in machine coordinates of the edge points. That is, the distance between edge points is calculated as the square root of the sum of squares of the distance in the Xm direction between the edge points (difference in Xm coordinates) and the distance in the Ym direction between the edge points (difference in Ym coordinates).

In the present modification, the distance between edge points is calculated based on the difference in image coordinates between the edge points and the difference in machine coordinates between the captured images. The edge point b and the edge point c illustrated in FIG. 5 are now described as an example. As described above, it is assumed that the image coordinates of the edge point b are expressed as (Xi (edge point b), Yi (edge point b)), and the image coordinates of the edge point c are expressed as (Xi (edge point c), Yi (edge point c)).

First, the difference in image coordinates between edge points is described. When the spacing (pixel) in the Xi direction between edge points is expressed as Dx (edge point b, edge point c), the spacing in the Xi direction between edge points is calculated by the following Equation (15).

$$Dx \text{ (edge point b, edge point c)} = Xi \text{ (edge point c)} - Xi \text{ (edge point b)} \quad \text{... Equation (15)}$$

Similarly, when the spacing (pixel) in the Yi direction between edge points is expressed as Dy (edge point b, edge point c), the spacing in the Yi direction between edge points is calculated by the following Equation (16).

$$Dy \text{ (edge point b, edge point c)} = Yi \text{ (edge point c)} - Yi \text{ (edge point b)} \quad \text{... Equation (16)}$$

Next, the difference in machine coordinates between captured images (the difference in machine coordinates of the imaging center) is described. When the distance in the Xm direction between imaging centers is expressed as Lx (imaging center B, imaging center C), the distance in the Xm direction between imaging centers is calculated by the following Equation (17).

$$Lx \text{ (imaging center B, imaging center C)} = Xm \text{ (imaging center C)} - Xm \text{ (imaging center B)} \quad \text{... Equation (17)}$$

Similarly, when the distance in the Ym direction between imaging centers is expressed as Ly (imaging center B, imaging center C), the distance in the Ym direction between imaging centers is calculated by the following Equation (18).

$$Ly \text{ (imaging center B, imaging center C)} = Ym \text{ (imaging center C)} - Ym \text{ (imaging center B)} \quad \text{... Equation (18)}$$

Therefore, the distance in the Xm direction between edge points is calculated by the following Equation (19). R represents the resolution as described above.

```
Lx (edge point b, edge point c) = Lx (imaging center B, imaging

center C) + R×Dx (edge point b, edge point c)   ... Equation

(19)
```

The distance in the Ym direction between edge points is calculated by the following Equation (20).

```
Ly (edge point b, edge point c) = Ly (imaging center B, imaging

center C) + R×Dy (edge point b, edge point c)   ... Equation

(20)
```

The distance between edge points is calculated using the square root of the sum of squares of the distance in the Xm direction between edge points and the distance in the Ym direction between the edge points. The calculation method in the present modification substantially corresponds to that in the embodiment, except the calculation procedure.

In the on-screen measurement, since the distance Lx in the Xm direction between imaging centers and the distance Ly in the Ym direction between the imaging centers are both 0, the calculation of the first term can be omitted from Equations (19) and (20). That is, since it suffices that only the second term is calculated, the distance between edge points is obtained without using the machine coordinates (Xm, Ym).

The following configuration can be derived based on the above embodiment and modifications.

A) The machine tool 800 includes the attachment unit 822 to which either the imaging unit 600 or a tool is removably attached.

B) The external computer 400 (an example of the information processing device) processes a two-dimensional captured image generated by being captured by the imaging unit 600 in the machine tool 800 in which the attachment unit 822 moves to image the workpiece W placed in the machine tool 800, and the imaging unit 600 images the workpiece W at the imaging position.

C) The process of checking the position where the workpiece W is placed is performed (see the fourth modification). Therefore, the imaging unit 600 moves to a predetermined position based on the machine coordinates in the machine tool 800, and thereafter captures to obtain the captured image.

D) The computation unit 486 calculates the position of the workpiece W on the basis of the captured image.

E) The machine tool 800 performs machining on the workpiece W.

F) The measurement process for the workpiece W is performed. In order to image a measurement target, the imaging unit 600 moves from a predetermined position to the imaging position, and thereafter captures an image of the measurement target at the imaging position. A two-dimensional captured image can thereby be obtained.

G) The computation unit 486 detects an edge of the workpiece W from the two-dimensional captured image, and calculates the length of the workpiece W from a plurality of edges detected.

In the above configuration A, the imaging unit 600 can be used by being attached to the attachment unit 822 to which a tool can also be attached. Therefore, the workpiece W can be measured while remaining placed after machining. This enables additional machining to be immediately performed when needed. That is, conventionally, the workpiece W is removed from the table for measurement, and when additional machining is needed, it is necessary to correctly place the workpiece W back on the table. This requires much time for setup. In this regard, the above embodiment and modifications do not cause such a problem as described. It is unnecessary to move the workpiece W, and this can ensure sufficient accuracy in measuring the correct length. Higher measurement accuracy can be achieved compared to the case where the device only needs to grip the workpiece W.

In the above configurations F and G, as illustrated in FIG. 3, a plurality of holes on the workpiece W may be measured in a single measurement process. The measurement process may be performed plural times corresponding to the plural times of machining to be performed. For example, the first machining is performed on the workpiece W, and then the measurement process is performed on a plurality of holes on the workpiece W as results of the first machining. Thereafter, the second machining is performed on the workpiece W, and then the measurement process is performed on the plurality of holes on the workpiece W as results of the second machining in the same manner. When a single measurement process is performed at a time on the plurality of holes in this manner, it is necessary to obtain at least as many captured images as the number of holes. That is, at least as many imaging positions as the number of holes are provided. In the example in FIG. 3, five imaging positions are provided.

In the above configurations D and G, the computation unit 486 performs edge detection from an image captured at a predetermined position to calculate the position of the workpiece W. Furthermore, the computation unit 486 calculates the position of the edge point that is a measurement target in the captured image from the distance between the position of the workpiece W and the center of the captured image. Specifically, the computation unit 486 calculates the distance in the Xm direction and the distance in the Ym direction between the position of the workpiece W and the center of the captured image. Next, the computation unit 486 calculates the spacing in the Xi direction and the spacing in the Yi direction between the center of the captured image and the edge point. The computation unit 486 multiplies the spacing in the Xi direction by the resolution, and multiplies the spacing in the Yi direction by the resolution, and can thereby calculate the distance in the Xm direction and the distance in the Ym direction between the center of the captured image and the edge point. The above two distances in the Xm direction are added to obtain the Xp coordinate of the edge point based on the position of the workpiece W. Similarly, the above two distances in the Ym direction are added to obtain the Yp coordinate of the edge point based on the position of the workpiece W. When the positions of two edge points are obtained, then the length between the edge points can also be obtained accordingly based on the obtained positions.

In the above configuration C, the "captured image" is an image that is used for checking the position. The "predetermined position" refers to the position of the imaging unit 600 that captures an image for checking the position where the workpiece W is placed. The "predetermined position" is different from the "imaging position" in the above configuration F. The "captured image" captured at the "predetermined position" includes a reference position (a specific edge point) of the workpiece W for calculating the position of the workpiece W. In the example in FIG. 3, the lower left corner corresponds to the reference position of the workpiece W. The reference position of the workpiece W corresponds with the machine-processing origin; however, it is permissible that they do not correspond with each other. That is, the reference position of the workpiece W may be different from the machine-processing origin. In the above configuration D, the position of a corner corresponding to some or all of the four corners is calculated as the position of the workpiece W (see FIG. 3). In the above configuration F, the "two-dimensional captured image" is an image that is used for measuring the workpiece W. The "imaging position" refers to the position of the imaging unit 600 that captures an image for measuring the workpiece W.

The "imaging position" described in the above configuration F indicates a position on the horizontal plane (Xm coordinate, Ym coordinate: see FIG. 1) as illustrated in FIG. 3, and also indicates a position in the height direction (Zm coordinate). For example, in FIG. 17, the two imaging positions are different in the height direction of the imaging unit 600. When an image is captured in the above configuration C, the position of the imaging unit 600 in the direction of the height H is also adjusted. In the above configuration F, the imaging unit 600 moves while maintaining its height H. Initially, an image is captured to measure L2, and thereafter the imaging unit 600 is moved downward to capture an image to measure L1. In this case, the Zm coordinate of the predetermined position is equal to the Zm coordinate of the imaging position for measuring L2. The Zm coordinate of the imaging position for measuring L1 is smaller than those described above.

The present invention is not limited to the above described embodiment or the modifications thereof, and may be embodied while modifying the components without departing from the scope of the invention. Various inventions may be formed by appropriately combining plural components disclosed in the above described embodiment and the modifications thereof. Further, several components may be omitted from the entire components described in the above described embodiment and the modifications thereof.

In the embodiment and the modifications, an approach motion is not needed unlike measurement with a touch probe. In addition, since a plurality of areas can be captured in a single imaging, the movement distance of the main shaft can be reduced. Therefore, workpiece measurement can be performed at a high speed. In the embodiment and the modifications, examples of the length of the workpiece calculated by the computation unit 486 include the diameter of a hole, the side length or diagonal-line length of a surface of the workpiece, and the arc length. Specifically, the radius and diameter of the first hole (FIG. 4), the radius and diameter of the second hole (FIG. 5), the distance between the machine-processing origin and the diagonal point (FIG. 7), the distance between corner points (FIG. 7), and the inner diameter L1 and the outer diameter L2 (FIG. 17) correspond to the length of the workpiece.

In the measurement using a touch probe, in addition to a repeatability error of the probe, a repeatability error in the machine tool 800 affects the measurement accuracy. However, in the on-screen measurement using the imaging unit 600, it is unnecessary to move the attachment unit 822 (the main shaft 100). Accordingly, a repeatability error in the machine tool 800 does not occur and the measurement accuracy is improved.

Measurement of a fine shape of a workpiece, or measurement of the orientation of the workpiece can be facilitated, although it is difficult when a touch probe is used. The fine shape is, for example, such a small hole or a narrow groove that a touch probe cannot be inserted. A workpiece with low rigidity or a thin portion of the workpiece cannot be measured correctly when a touch probe is used, for the reason that the low-rigidity workpiece or the thin portion may be deflected or deformed by the touch probe. In contrast, in the embodiment and the modifications, a pressure is not applied to a workpiece, which is advantageous in performing correct measurement without causing a deflection or deformation.

Further, placement error of a workpiece is automatically determined, and the correction value is set for the machine tool 800. This can reduce the machining error in the machine tool 800. Furthermore, an alert is issued when the placement error of the workpiece is determined to have occurred. This can prevent a machining defect or can inform a worker of the incorrect placement of the workpiece to prompt the worker to correct the inappropriate placement.

This application claims priority from Japanese Patent Application No. 2021-158845 filed on September 29, 2021 and Japanese Patent Application No. 2022-107560 filed on July 4, 2022, the entire contents of which are hereby incorporated by reference herein.

**Claims**

1. An information processing device to process a two-dimensional captured image generated by being captured by an imaging unit in a machine tool including an attachment unit to which the imaging unit or a tool is removably attached, the attachment unit moving to capture an image of a workpiece placed in the machine tool, the imaging unit capturing the image of the workpiece at an imaging position, the information processing device comprising a computation unit for:

   (i) calculating a position of the workpiece based on a captured image that is captured after the imaging unit has moved to a predetermined position based on machine coordinates of the machine tool; and
   (ii) detecting an edge of the workpiece from the two-dimensional captured image that is captured by the imaging unit at an imaging position after the imaging unit has been moved from the predetermined position to the imaging position, and calculating a length of the workpiece from a plurality of edges detected.

2. The information processing device according to claim 1, wherein the computation unit calculates a center of a circular measurement target portion on the workpiece as the length on the workpiece, and calculates a diameter of the measurement target portion from any two edge points intersecting a straight line passing through the center.

3. The information processing device according to claim 1, wherein the computation unit detects a first edge from a first captured image in which a portion of the workpiece is imaged by the imaging unit, and detects a second edge from a second captured image in which another portion of the workpiece is imaged by the imaging unit by moving the imaging unit, and calculates a diameter of a circular measurement target portion on the workpiece as the length on the workpiece based on the first edge and the second edge.

4. The information processing device according to claim 1, wherein the computation unit calculates coordinates of a machine-processing origin of the workpiece from the edge, and calculates a deviation of placement position of the workpiece based on the coordinates of the machine-processing origin.

5. The information processing device according to claim 1, wherein the computation unit calculates first coordinates of a first reference point of the workpiece from a first edge of the workpiece, calculates second coordinates of a second reference point of the workpiece from a second edge of the workpiece, and calculates a deviation of orientation in which the workpiece is placed based on the first coordinates and the second coordinates.

6. The information processing device according to claim 1, comprising an output unit for outputting an alert when the computation unit determines, based on the length on the workpiece, that the workpiece placed in the machine tool does not have a predetermined size or a predetermined shape.

7. A machining system comprising:

   a machine tool including an attachment unit to which the imaging unit is removably attached, the attachment unit being movable to capture the image of the workpiece positioned in the machine tool; and
   the information processing device according to any one of claims 1 to 6.

8. A machine tool comprising:

   an attachment unit to which an imaging unit is removably attached, the attachment unit being movable to capture an image of a workpiece positioned in the machine tool; and
   a computation unit for detecting an edge of the workpiece from a two-dimensional captured image obtained from the imaging unit, and calculating a length of the workpiece from a plurality of edges detected.

9. A program to process a two-dimensional captured image generated by being captured by an imaging unit in a machine tool including an attachment unit to which the imaging unit or a tool is removably attached, the attachment unit moving to capture an image of a workpiece placed in the machine tool, the imaging unit capturing the image of the workpiece at an imaging position, the program comprising:

(i) a function of calculating a position of the workpiece based on a captured image that is captured after the imaging unit has moved to a predetermined position based on machine coordinates of the machine tool; and
(ii) a function of detecting an edge of the workpiece from the two-dimensional captured image that is captured by the imaging unit at an imaging position after the imaging unit has been moved from the predetermined position to the imaging position, and calculating a length of the workpiece from a plurality of edges detected.

FIG. 1

EP 4 249 169 A1

# FIG. 2

# FIG. 3

<MACHINING DRAWING>

# FIG. 4

1600 PIXELS (7.2mm)

EDGE POINT a4
(TANGENT POINT)

EDGE POINT a2
(TANGENT POINT)

45DEGREES

1200 PIXELS
(5.4mm)

IMAGING
CENTER A

Yi

EDGE POINT a1
(TANGENT POINT)

EDGE POINT a3
(TANGENT POINT)

135 DEGREES

Xi

IMAGE ORIGIN

&lt;IMAGE&gt;

1600 PIXELS (7.2mm)

240 DEGREES

EDGE POINT a7
(TANGENT POINT)

EDGE POINT a6
(TANGENT POINT)

120 DEGREES

IMAGING
CENTER A

1200 PIXELS
(5.4mm)

Yi

EDGE POINT a5
(TANGENT POINT)

Xi

IMAGE ORIGIN

&lt;IMAGE&gt;

# FIG. 5

1600 PIXELS（7.2mm）

1200 PIXELS
（5.4mm）

IMAGING CENTER B

EDGE POINT b
(TANGENT POINT)

Yi

Xi

IMAGE ORIGIN

135 DEGREES

＜IMAGE＞

1600 PIXELS（7.2mm）

EDGE POINT c
(TANGENT POINT)

135 DEGREES

1200 PIXELS
（5.4mm）

IMAGING CENTER C

Yi

Xi

IMAGE ORIGIN

＜IMAGE＞

FIG. 6

600 IMAGING UNIT

400 EXTERNAL COMPUTER

S40 RECEIVE MACHINE-PROCESSING COORDINATES OF IMAGING CENTER

S42 CONVERT TO MACHINE COORDINATES OF IMAGING CENTER

S44 INSTRUCT TO ATTACH IMAGING UNIT

S46 INSTRUCT TO MOVE ATTACHMENT UNIT

IMAGING INSTRUCTION (S48)

S50 IMAGE

IMAGE (S52)

S54 PERFORM EDGE DETECTION

S56 DETECT IMAGE COORDINATES OF EDGE POINT

S58 CONVERT TO MACHINE COORDINATES OF EDGE POINT

S60 CALCULATE DIMENSION

600 IMAGING UNIT

400 EXTERNAL COMPUTER

880 NUMERICAL CONTROL DEVICE

S10 INSTRUCT TO ATTACH IMAGING UNIT

S12 INSTRUCT TO MOVE ATTACHMENT UNIT

IMAGING INSTRUCTION (S14)

IMAGING INSTRUCTION (S16)

S18 IMAGE

IMAGE (S20)

MACHINE COORDINATES OF IMAGING CENTER (S22)

S24 PERFORM EDGE DETECTION

S26 DETECT IMAGE COORDINATES OF EDGE POINT

S28 CONVERT TO MACHINE COORDINATES OF EDGE POINT

S30 CALCULATE DIMENSION

# FIG. 7

100mm

W

0.9mm

ACTUAL MACHINE-
PROCESSING ORIGIN

100mm

0.9mm

IMAGING CENTER D
(IDEAL MACHINE-
PROCESSING ORIGIN)

<TOP VIEW>

ACTUAL DIAGONAL POINT

100mm

IMAGING CENTER E
(IDEAL DIAGONAL
POINT)

W

1 DEGREE

100mm

Yp

Xp

ACTUAL MACHINE-
PROCESSING ORIGIN

IMAGING CENTER D
(IDEAL MACHINE-
PROCESSING ORIGIN)

<TOP VIEW>

# FIG. 8

1600 PIXELS (7.2mm)

200 PIXELS
(0.9mm)

EDGE POINT d
(ACTUAL MACHINE-
PROCESSING ORIGIN)

1200 PIXELS
(5.4mm)

200 PIXELS
(0.9mm)

IMAGING CENTER D
(IDEAL MACHINE-
PROCESSING ORIGIN)

Yi

Xi

IMAGE ORIGIN

<IMAGE>

1600 PIXELS (7.2mm)

EDGE POINT d
(ACTUAL MACHINE-
PROCESSING ORIGIN)

1 DEGREE

1 DEGREE

1200 PIXELS
(5.4mm)

IMAGING CENTER D
(IDEAL MACHINE-
PROCESSING ORIGIN)

Yi

Xi

IMAGE ORIGIN

<IMAGE>

1600 PIXELS (7.2mm)

EDGE POINT e
(ACTUAL DIAGONAL
POINT)

1200 PIXELS
(5.4mm)

IMAGING CENTER E
(IDEAL DIAGONAL
POINT)

Yi

Xi

IMAGE ORIGIN

<IMAGE>

# FIG. 9

| NUMERICAL CONTROL DEVICE ⌐880 | EXTERNAL COMPUTER ⌐400 | IMAGING UNIT ⌐600 |
|---|---|---|

S70 | INSTRUCT TO ATTACH IMAGING UNIT

S72 | INSTRUCT TO MOVE ATTACHMENT UNIT

IMAGING INSTRUCTION(S74)　　　　IMAGING INSTRUCTION(S76)

S78 | IMAGE

MACHINE COORDINATES OF IMAGING CENTER D(S82)　　　IMAGE(S80)

S84 | PERFORM EDGE DETECTION

S86 | DETECT IMAGE COORDINATES OF MACHINE-PROCESSING ORIGIN

S88 | CONVERT TO MACHINE COORDINATES OF MACHINE-PROCESSING ORIGIN

S90 | CALCULATE AND TRANSMIT OFFSET VALUE

S100 | INSTRUCT TO MOVE ATTACHMENT UNIT

IMAGING INSTRUCTION(S102) | IMAGING INSTRUCTION(S104)

S106 | IMAGE

MACHINE COORDINATES OF IMAGING CENTER E(S110)　　　IMAGE(S108)

S112 | PERFORM EDGE DETECTION

S114 | DETECT IMAGE COORDINATES OF DIAGONAL POINT

S116 | CONVERT TO MACHINE COORDINATES OF DIAGONAL POINT

S118 | CALCULATE AND TRANSMIT CORRECTION ROTATION ANGLE

35

# FIG. 10

1600 PIXELS (7.2mm)

EDGE POINT
(TANGENT POINT)

1200 PIXELS
(5.4mm)

IMAGING
CENTER A

Yi

Xi

IMAGE ORIGIN

<IMAGE>

1600 PIXELS (7.2mm)

EDGE POINT
(TANGENT POINT)

1200 PIXELS
(5.4mm)

IMAGING
CENTER A

Yi

Xi

IMAGE ORIGIN

<IMAGE>

# FIG. 11

```
                    ⌐880                      ⌐400                      ⌐600
        ┌─────────────────┐      ┌─────────────────┐      ┌─────────────────┐
        │    NUMERICAL    │      │     EXTERNAL    │      │     IMAGING     │
        │ CONTROL DEVICE  │      │    COMPUTER     │      │      UNIT       │
        └─────────────────┘      └─────────────────┘      └─────────────────┘
```

S120 | INSTRUCT TO ATTACH IMAGING UNIT

MEASUREMENT INSTRUCTION (S122)

ATTACHMENT-UNIT MOVEMENT INSTRUCTION (MACHINE COORDINATES OF IMAGING CENTER) (S124)

S126 | INSTRUCT TO MOVE ATTACHMENT UNIT

MACHINE COORDINATES OF ATTACHMENT UNIT (S128)

IMAGING INSTRUCTION (S130)

S132 | IMAGE

IMAGE (S134)

S136 | PERFORM EDGE DETECTION

S138 | DETECT IMAGE COORDINATES OF EDGE POINT

S140 | CONVERT TO MACHINE COORDINATES OF EDGE POINT

S142 | CALCULATE DIMENSION

# FIG. 12

1600 PIXELS (7.2mm)

Pe18 Pe1 Pe2

Pe17

Pe16 Pe3

IMAGING
CENTER U Pe4

Pe15 Pe5

Pe14 Pe6

Yi

Pe13 Pe7

Xi

IMAGE ORIGIN

1200 PIXELS
(5.4mm)

<IMAGE 1>

1600 PIXELS (7.2mm)

Pe16 Pe4

Pe15 Pe5

Pe14 Pe6

IMAGING
CENTER V Pe7

Pe13

Pe12 Pe8

Yi

Pe11 Pe10 Pe9

Xi

IMAGE ORIGIN

1200 PIXELS
(5.4mm)

<IMAGE 2>

# FIG. 13

LIVE VIEW IMAGE

STITCHING IMAGE

CAD DATA

CAD IMAGE

List1
1. Move
2. Point
3. Move
4. Circle
5. Point
6. Intersection

# FIG. 14

720    714

List1
1. Move
2. Point
3. Move
4. Circle
5. Point
6. Intersection

700

720    714

List1
1. Move
2. Point
3. Move
4. Circle
5. Point
6. Intersection

700    722

720    714

List1
1. Move
2. Point
3. Move
4. Circle
5. Point
6. Intersection

700    724    722

FIG. 15

714

730

List1
1. Move
2. Point
3. Move
4. Circle
5. Point
6. Intersection

700

714

List1
1. Move
2. Point
3. Move
4. Circle
5. Point
6. Intersection

700

732

730

# FIG. 16

MEASUREMENT REGION

Pe5

AFFINE TRANSFORMATION
BILINEAR INTERPOLATION

CUTOUT IMAGE

Yc

Xc

Yi

Xi

IMAGE

DIFFERENTIAL FILTER
SPLINE INTERPOLATION

COORDINATE
CONVERSION

Yc

Xc

EDGE POINT

FIRST-ORDER DIFFERENTIAL VALUE OF BRIGHTNESS

90

40

0

◆ : FIRST-ORDER DIFFERENTIAL VALUE OF BRIGHTNESS

----- : SPLINE INTERPOLATED VALUE

0          10          20          30

PEAK OF INTERPOLATED VALUE          Xc [PIXEL]

EP 4 249 169 A1

FIG. 17

EP 4 249 169 A1

## INTERNATIONAL SEARCH REPORT

| International application No. |
| --- |
| **PCT/JP2022/034919** |

**A.    CLASSIFICATION OF SUBJECT MATTER**

*B23Q 17/24*(2006.01)i; *B23Q 17/20*(2006.01)i; *G01B 11/00*(2006.01)i; *G01B 11/02*(2006.01)i; *G05B 19/18*(2006.01)i; *G05B 19/404*(2006.01)i

FI:    B23Q17/24 B; B23Q17/20 A; B23Q17/24 Z; G01B11/00 A; G01B11/02 H; G05B19/18 W; G05B19/404 H

According to International Patent Classification (IPC) or to both national classification and IPC

**B.    FIELDS SEARCHED**

Minimum documentation searched (classification system followed by classification symbols)

B23Q17/24; B23Q17/20; G01B11/00; G01B11/02; G05B19/18; G05B19/404

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C.    DOCUMENTS CONSIDERED TO BE RELEVANT**

| Category* | Citation of document, with indication, where appropriate, of the relevant passages | Relevant to claim No. |
| --- | --- | --- |
| Y | JP 2010-58239 A (MORI SEIKI CO LTD) 18 March 2010 (2010-03-18) paragraphs [0017]-[0033], fig. 1-9 | 1-9 |
| Y | JP 2020-17111 A (FANUC LTD) 30 January 2020 (2020-01-30) paragraphs [0051]-[0057], fig. 17-18 | 1-9 |
| Y | JP 2000-221010 A (NEC HOME ELECTRONICS LTD) 11 August 2000 (2000-08-11) column 6, lines 6-34, fig. 1-4 | 2 |
| Y | JP 2008-151706 A (NIKON CORP) 03 July 2008 (2008-07-03) paragraphs [0013]-[0055], fig. 1-4 | 3 |
| Y | JP 2007-281126 A (NIKON CORP) 25 October 2007 (2007-10-25) paragraphs [0017]-[0021], fig. 2-4 | 3 |

☐ Further documents are listed in the continuation of Box C.        ☑ See patent family annex.

| | |
| --- | --- |
| *    Special categories of cited documents: | "T"    later document published after the international filing date or priority date and not in conflict with the application but cited to understand the principle or theory underlying the invention |
| "A"    document defining the general state of the art which is not considered to be of particular relevance | |
| "E"    earlier application or patent but published on or after the international filing date | "X"    document of particular relevance; the claimed invention cannot be considered novel or cannot be considered to involve an inventive step when the document is taken alone |
| "L"    document which may throw doubts on priority claim(s) or which is cited to establish the publication date of another citation or other special reason (as specified) | |
| "O"    document referring to an oral disclosure, use, exhibition or other means | "Y"    document of particular relevance; the claimed invention cannot be considered to involve an inventive step when the document is combined with one or more other such documents, such combination being obvious to a person skilled in the art |
| "P"    document published prior to the international filing date but later than the priority date claimed | "&"    document member of the same patent family |

| Date of the actual completion of the international search | Date of mailing of the international search report |
| --- | --- |
| **14 November 2022** | **22 November 2022** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

**INTERNATIONAL SEARCH REPORT**
Information on patent family members

| International application No. |
| --- |
| **PCT/JP2022/034919** |

| Patent document cited in search report | | | Publication date (day/month/year) | Patent family member(s) | Publication date (day/month/year) |
| --- | --- | --- | --- | --- | --- |
| JP | 2010-58239 | A | 18 March 2010 | (Family: none) | |
| JP | 2020-17111 | A | 30 January 2020 | US 2020/0033109 A1 paragraphs [0085]-[0102], fig. 17-18 DE 102019208700 A1 CN 110793431 A | |
| JP | 2000-221010 | A | 11 August 2000 | (Family: none) | |
| JP | 2008-151706 | A | 03 July 2008 | (Family: none) | |
| JP | 2007-281126 | A | 25 October 2007 | (Family: none) | |

Form PCT/ISA/210 (patent family annex) (January 2015)

45

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2019185581 A
- JP 2021158845 A
- JP 2022107560 A